(19) Europäisches Patentamt / European Patent Office / Office européen des brevets

(11) **EP 2 410 367 A1**

(12) **EUROPEAN PATENT APPLICATION**
published in accordance with Art. 153(4) EPC

(43) Date of publication:
**25.01.2012 Bulletin 2012/04**

(51) Int Cl.:
**G02B 21/36** (2006.01)   **G02B 7/28** (2006.01)
**G02B 21/00** (2006.01)   **H04N 5/225** (2006.01)
**H04N 5/232** (2006.01)

(21) Application number: **10753422.4**

(22) Date of filing: **01.03.2010**

(86) International application number:
**PCT/JP2010/053707**

(87) International publication number:
**WO 2010/106928 (23.09.2010 Gazette 2010/38)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.03.2009 JP 2009064762**

(71) Applicant: **Sony Corporation**
**Tokyo 108-0075 (JP)**

(72) Inventor: **KISHIMA Koichiro**
**Tokyo 108-0075 (JP)**

(74) Representative: **Beder, Jens**
**Mitscherlich & Partner**
**Patent-und Rechtsanwälte**
**Sonnenstraße 33**
**80331 München (DE)**

(54) **IMAGE CREATING DEVICE AND IMAGE CREATING METHOD**

(57)   An image forming apparatus (1) forms a standard image (P1) and an other picked-up image (PC2) by connecting standard picked-up images (PC1) at standard positions (Z1) to each other and connecting other picked-up images (PC2) at other positions (Z2) to each other with respect to imaging points (QC). In addition, the image forming apparatus (1) determines whether or not air bubbles (BB) are contained in an embedding substance (103) on the basis of the standard image (P1) and substitutes the standard image (P1) with the other image (P2) in a part where the air bubbles (BB) are contained to form a body tissue image (PR). In this manner, the image forming apparatus (1) can form the body tissue image (PR) which is nearly completely clear.

FIG.6

EP 2 410 367 A1

**Description**

Technical Field

The present invention relates to an image forming apparatus and an image forming method, and is preferably applied to, for example, an image forming apparatus which images a body tissue to form a body tissue image.

Background Art

In the past, when performing pathological diagnosis based on a body tissue, a pathology slide in which the body tissue had been fixed onto a glass slide was made and doctors observed the pathology slide by using a microscope or the like.

In recent years, from the point of convenience, a method is also proposed of using an image forming apparatus which images a body tissue on a glass slide in advance to form an image of the body tissue to thereby allow doctors to make a pathological diagnosis by displaying the image (for example, see Patent Literature 1).

In general, such an image forming apparatus forms image data through an imaging principle similar to that of digital cameras. In addition, due to restrictions such as the number of pixels of an imaging element and the angle of view of a lens, the image forming apparatus uses a method including: setting a plurality of imaging points; sequentially imaging a part of a body tissue while slowly moving an imaging range; and connecting the picked-up images to each other.

Citation List

[PTL 1] JP-A-2006-292999 (Fig. 1)

Summary of Invention

However, the pathology slide is made in a manner such that a thinly sliced body tissue is placed on a glass plate, a predetermined embedding substance is applied thereto, and then a cover glass is put thereon. At this time, in the pathology slide, air bubbles may be included in the embedding substance.

When air bubbles are included in the embedding substance, the focal point position differs between a position where the air bubbles are present and a position where the air bubbles are not present due to a difference in the refractive index between the air bubbles and the embedding substance. Accordingly, the image forming apparatus has problems in that correct body tissue images cannot be obtained, including blurred images which are obtained because focus is not achieved at a place where air bubbles are present when a pathology slide is imaged.

The invention is contrived in consideration of the above-described point and is to propose an image forming apparatus and an image forming method to form a clear image of a body tissue.

In order to solve the problem, an image forming apparatus includes: an imaging portion which forms an image by condensing the light which is obtained from a pathology slide in which a sliced body tissue is placed on a placing surface of a glass slide and is covered with an embedding substance and a cover glass by a predetermined imaging lens; a focal point moving portion which changes a relative position of the focal point of the imaging lens to the pathology slide in the optical axis direction of the imaging lens; a focal point position obtaining portion which obtains, among the relative positions, a standard position where the focal point of the imaging lens is matched with the body tissue when air bubbles are not contained in the embedding substance on the optical axis, and an other position closer to a position where the focal point of the lens is matched with the body tissue when air bubbles are contained in the embedding substance on the optical axis than the standard position; an imaging control portion which forms, by the imaging portion, a standard image and an other image when the relative positions of the focal point of the imaging lens are set as the standard position and the other position by the focal point moving portion; an air bubble information obtaining portion which obtains air bubble information representing a place where the air bubbles are present in the pathology slide; and an image forming portion which forms a body tissue image in which a part excluding the air bubbles in the standard image and a part corresponding to the air bubbles in the other image are synthesized on the basis of the air bubble information.

In this manner, the image forming apparatus of the invention specifies and substitutes a part having air bubbles in a standard image with a clearer other image, and thus can form a body tissue image.

In addition, an image forming method includes: a standard position obtaining step of obtaining, as a relative position between an imaging lens and a pathology slide in which a sliced body tissue is placed on a placing surface of a glass slide and is covered with an embedding substance and a cover glass, a standard position where the focal point of the imaging lens is matched with the body tissue when air bubbles are not contained in the embedding substance on the optical axis of the imaging lens; an other position obtaining step of obtaining, as the relative position, an other position closer to a position where the focal point of the lens is matched with the body tissue when air bubbles are contained in the embedding substance on the optical axis than the standard position; a moving step of moving relative positions of the focal point of the imaging lens to the pathology slide to the standard position and the other position in the optical axis direction of the imaging lens; an image forming step of forming a standard image and an other image by condensing the light which is obtained from the body tissue when the relative positions are moved to the standard position and the other position by the imaging lens; an air bubble information obtaining step of obtaining air bubble information representing a place where the air bubbles are present in the pathology slide; and an image forming step of forming a body tissue image in which a part excluding the air bubbles in the standard image and a part corresponding to the air bubbles in the other image are synthesized on the basis of the air bubble information.

In this manner, in the image forming method of the invention, a part having air bubbles in a standard image is specified and substituted with a clearer other image and thus a body tissue image can be formed.

According to the invention, a body tissue image can be formed by substituting a part having air bubbles in a standard image with a clearer other image. Thus, the invention can realize an image forming apparatus and an image forming method which can form a clear image of a body tissue.

Brief Description of Drawings

Fig. 1 shows outlined line drawings of the configuration of a pathology slide.
Fig. 2 shows outlined line drawings of the configuration of the pathology slide.
Fig. 3 shows outlined line drawings of the configuration of the pathology slide.
Fig. 4 is an outlined line drawing showing the configuration of an image forming apparatus.
Fig. 5 is an outlined line drawing for illustrating the setting of measurement points and imaging points.
Fig. 6 shows outlined line drawings for illustrating image synthesis.
Fig. 7 is a flowchart showing an image formation procedure.
Fig. 8 is an outlined line drawing showing the configuration of an image forming system.
Fig. 9 is an outlined line drawing showing the configuration of a focal information generating device.
Fig. 10 is an outlined line drawing showing the configuration of a first light receiver.
Fig. 11 shows outlined line drawings showing the signal waveforms when an object lens is moved in the Z direction.
Fig. 12 shows outlined line drawings showing the signal waveforms when the object lens is moved in the Z direction.
Fig. 13 is a flowchart showing a focal point position detection procedure.
Fig. 14 is an outlined line drawing showing the presence or absence of air bubbles for each measurement point which are represented by air bubble information.
Fig. 15 is a flowchart showing an image formation procedure according to a second embodiment.

Description of Embodiments

Hereinafter, modes for carrying out the invention (hereinafter, referred to as embodiments) will be described using the drawings. The descriptions will be given in the following order.

1. First Embodiment (Example of Fixed Focusing Position)
2. Second Embodiment (Example of Unfixed Focusing Position)
3. Other Embodiments

<1. First Embodiment>

[1-1. Configuration of Pathology slide]

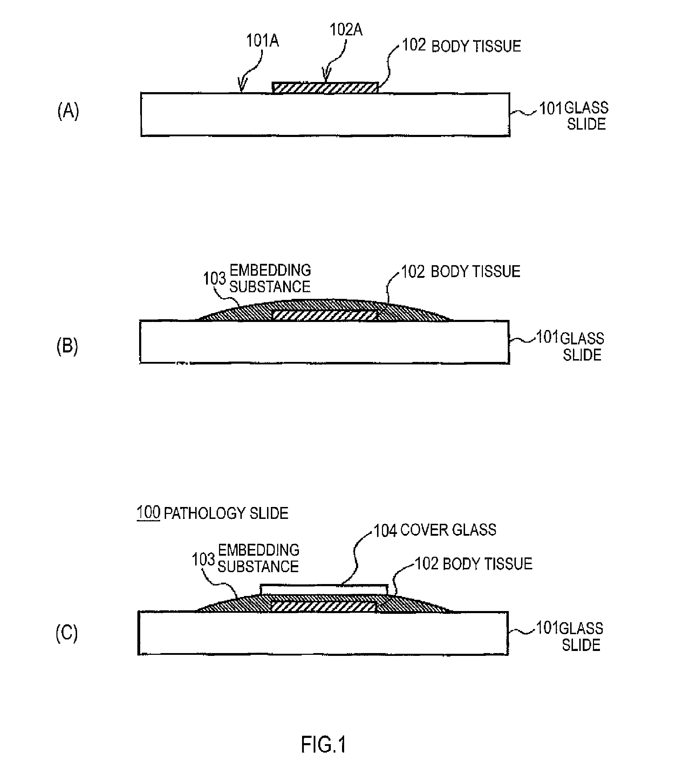

Before the description of an imaging apparatus of the invention, the configuration of a pathology slide 100 holding a body tissue which is an imaging target will be described using the cross-sectional views shown in Figs. 1(A) to 1(C) along the making process thereof.

In the actual pathology slide 100, first, on a placing surface 101A of a glass slide 101 which has a thin plate shape and is made of a glass material, a thinly sliced body tissue 102 is placed and spreads at about the center (Fig. 1(A)).

The glass slide 101 has a length of about 75 [mm] in the horizontal direction in the drawing, a length of about 25 [mm] in the depth direction, and a thickness (that is, the length in the vertical direction in the drawing) of about 2 [mm].

Both of the lengths of the body tissue 102 in the horizontal direction and in the depth direction in the drawing are about 15 [mm] and the thickness is about 3 to 5 [$\mu$m]. In addition, the body tissue 102 is subjected to a predetermined staining process and it is known that the optical refractive index thereof is in the range of about 1.3 to 1.5. Hereinafter, the upper surface of the body tissue 102 will be referred to as an imaging surface 102A.

Next, in the pathology slide 100, an embedding substance 103 is applied so as to cover the body tissue 102 on the placing surface 101A of the glass slide 101 (Fig. 1(B)), and a cover glass 104 is put so as to cover the body tissue 102 from above (Fig. 1(C)).

Thereafter, since the embedding substance 103 is hardened, the body tissue 102 and the cover glass 104 are fixed to the glass slide 101. Thus, the pathology slide 100 is completed.

The cover glass 104 has a length of about 40 [mm] in the horizontal direction in the drawing, a length of about 24 [mm] in the depth direction, and a thickness of about 0.12 to 0.17 [mm].

The embedding substance 103 covered with the cover glass 104 has a thickness of about 10 [μm]. Both of the optical refractive indexes in the embedding substance 103 and the cover glass 104 are about 1.5.

In the first embodiment, the distance (hereinafter, referred to as a cover distance DC) from the upper surface 104A of the cover glass 104 to the body tissue 102 is assumed to be constant.

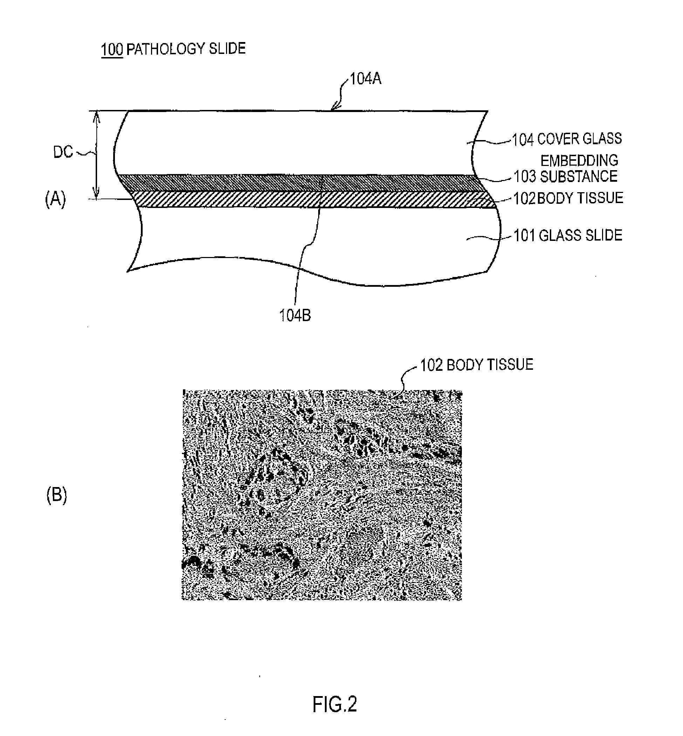

Ideally, the pathology slide 100 has a state in which the space between the body tissue 102 and the cover glass 104 is filled with the embedding substance 103 as shown in Fig. 2(A) in which a part of Fig. 1(C) is enlarged.

In this pathology slide 100, as shown in the top view of Fig. 2(B) corresponding to Fig. 2(A), the body tissue 102 can be observed via the cover glass 104 and the embedding substance 103 (none of which are shown).

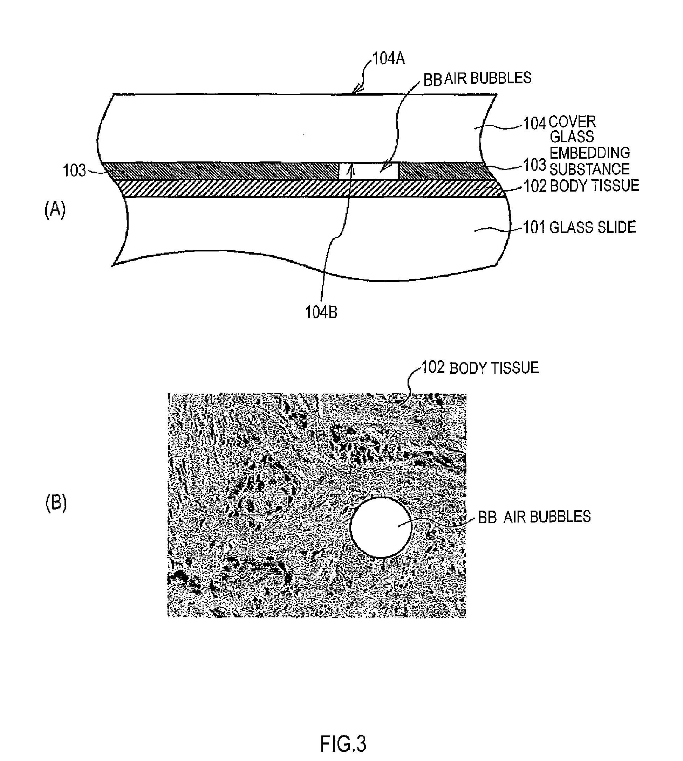

However, in the actual pathology slide 100, air bubbles BB are contained in the embedding substance 103 as shown in the cross-sectional view of Fig. 3(A) corresponding to Fig. 2(A).

At this time, in the actual pathology slide 100, in a part where the air bubbles BB are contained, instead of the embedding substance 103, a gas such as air occupies the space between the body tissue 102 and the cover glass 104.

Here, the refractive index of the embedding substance 103 is about 1.5 and the refractive index of the air bubbles BB is about 1. Accordingly, the light is thought to be refracted at the boundary surface between the embedding substance 103 and the air bubbles BB. As a result, when the pathology slide 100 is viewed from above, the visibility of the place where the air bubbles BB are present and the place where the air bubbles BB are not present differs as shown in Fig. 3(B) corresponding to Fig. 2(B).

In addition, when assuming an optical path from the upper surface 104A of the cover glass 104 to the body tissue 102, the optical length (so-called optical path length) in the case in which the air bubbles BB are present is different from that in the case in which the air bubbles BB are not present.

At this time, since the thickness of the embedding substance 103 is about 10 [μm] and the difference in the refractive index between the embedding substance 103 and the air bubbles BB is about 0.5, about 5 [μm], which is obtained by multiplying both of the above values, becomes a difference in the optical path length.

In this manner, the pathology slide 100 has a configuration in which the body tissue 102 is covered with the cover glass 104 via the embedding substance 103 on the placing surface 101A of the glass slide 101. The air bubbles BB may be contained in the embedding substance 103.

[1-2. Configuration of Image Forming Apparatus]

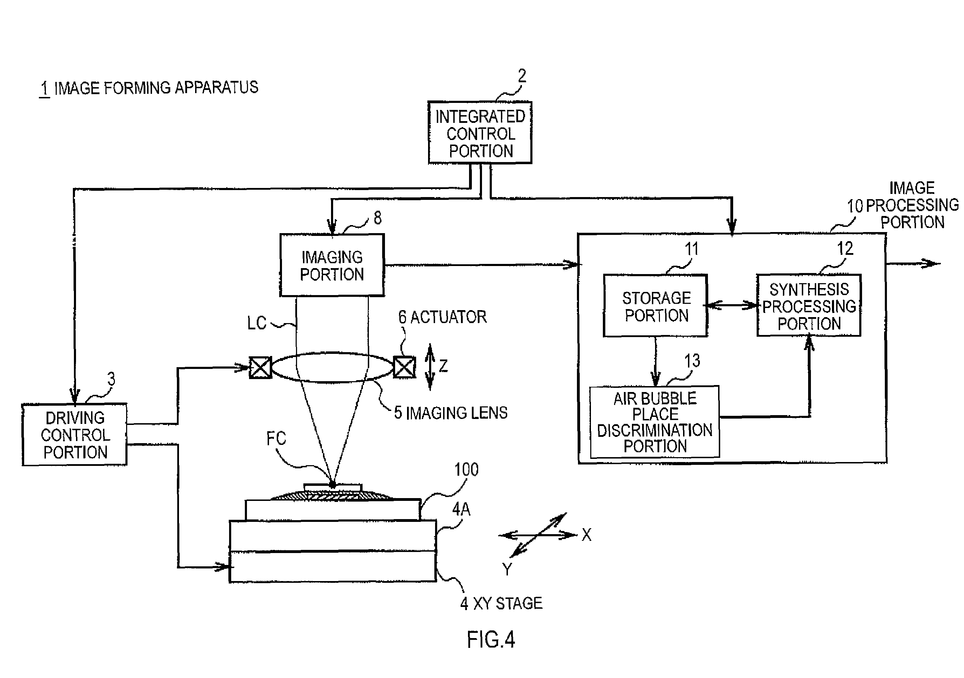

Next, an image forming apparatus 1 which forms an image by imaging the pathology slide 100 will be described. As shown in Fig. 4, an integrated control portion 2 integrally controls the entire image forming apparatus 1.

The integrated control portion 2 is constituted of a central processing unit (CPU) (not shown), a read only memory (ROM) which stores various programs and the like, and a random access memory (RAM) which is used as a working memory of the CPU.

An imaging portion 8 focuses on the body tissue 102 to perform imaging. However, due to restrictions and the like of the imaging element, the range which can be imaged by a single imaging process is narrower than the entire imaging range 102AR (Fig. 2(B)) of the body tissue 102.

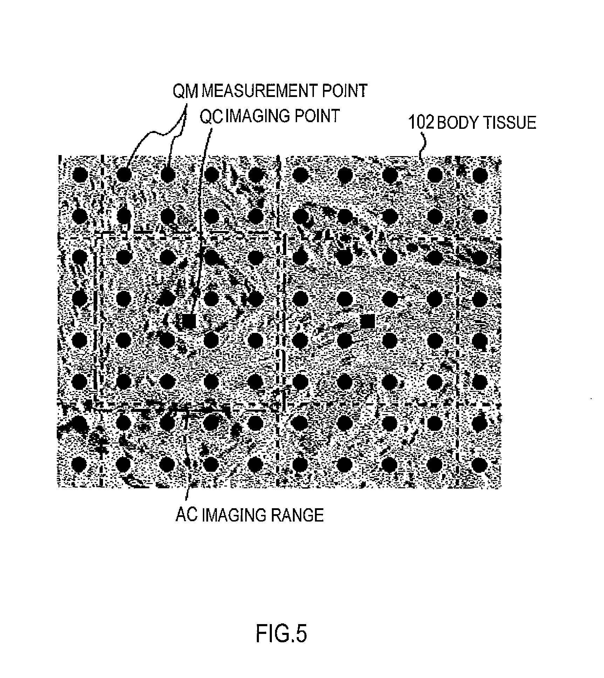

Accordingly, in the image forming apparatus 1, as shown in Fig. 5, a plurality of imaging points QC is set at approximately equal intervals on the pathology slide 100. The imaging point QC is set on the basis of the size of a range AC of single imaging in the image forming apparatus 1 so that the imaging ranges AC adjacent to each other slightly overlap each other.

In response to this, an XY stage 4 is provided to move a predetermined moving stage 4A, to which the pathology slide 100 is fixed, in the leftward direction (hereinafter, referred to as the X direction) of the drawing and in the direction toward the front or rear side (hereinafter, referred to as the Y direction).

The actual integrated control portion 2 has and supplies imaging point position information based on the position of the imaging point QC to a driving control portion 3. The driving control portion 3 generates and supplies a position control signal based on the imaging point position information to the XY stage 4 to move the moving stage 4A to which the pathology slide 100 is fixed in the X and Y directions.

Under the control of the integrated control portion 2 and the driving control portion 3, an imaging lens 5 is moved in the direction (hereinafter, referred to as the Z direction) along the optical axis of imaging light by an actuator 6, and accompanying this, a focal point FC of the imaging lens 5 can be moved in the Z direction.

In addition, the image forming apparatus 1 emits light to the pathology slide 100 from an optical source (not shown). At this time, the imaging lens 5 condenses the light reflected by the pathology slide 100 or the light (hereinafter, referred to as imaging light LC) transmitted through the pathology slide to direct the light toward the imaging portion 8. At this time, the imaging light LC displays an image at the focal point FC.

The imaging portion 8 having an imaging element such as a complementary metal oxide semiconductor (CMOS) forms a picked-up image PC based on the imaging light LC by the imaging element and supplies this image to an image processing portion 10. At this time, the picked-up image PC shows an image of the imaging range AC having the imaging point QC at the center thereof.

The image processing portion 10 can perform various processes on image data and is constituted of a storage portion 11 storing images, a synthesis processing portion 12 performing an image synthesis process, and an air bubble place discrimination portion 13 which discriminates a place where the air bubbles BB are present.

The storage portion 11 stores images such as the picked-up image PC. The synthesis processing portion 12 can perform a synthesis process of connecting designated ranges in a plurality of images to each other to synthesize the images as one image. The air bubble place discrimination portion 13 discriminates a place where the air bubbles BB are present in the image data (the detailed description will be given later).

The image processing portion 10 performs the synthesis process on the basis of a plurality of picked-up images PC using the synthesis processing portion 12 to form a body tissue image PR and outputs the image PR to exterior equipment (not shown).

In this manner, the image forming apparatus 1 forms the body tissue image PR on the basis of the picked-up images PC which are picked-up by the imaging portion 8.

[1-3. Formation of Body Tissue Image]

Meanwhile, the above-described air bubbles BB may be contained in the embedding substance 103 of the pathology slide 100 (Figs. 3(A) and 3(B)). At this time, as described above, in the pathology slide 100, the optical path length from the upper surface 104A of the cover glass 104 to the body tissue 102 in the case in which the air bubbles BB are present is different by about 5 [$\mu$m] from that in the case in which the air bubbles BB are not present.

This means that in the image forming apparatus 1, the optimal position (hereinafter, referred to as a focusing position) of the imaging lens 5 for matching the focal point FC with the body tissue 102 is different by about 5 [$\mu$m] between the case in which the air bubbles BB are present in the embedding substance 103 and the case in which the air bubbles BB are not present in the embedding substance 103.

In addition, in the first embodiment, as described above, there is an assumption that the cover distance DC is constant. Accordingly, the image forming apparatus 1 can match the focal point FC with the body tissue 102 at all of the imaging point QC when matching the focal point FC of the imaging lens 5 with the body tissue 102 at any one imaging point QC.

Accordingly, the image forming apparatus 1 sets in advance a focusing position (hereinafter, referred to as a standard position Z1) for the case in which the air bubbles BB are not present in the embedding substance 103 and a focusing position (hereinafter, referred to as ab other position Z2) for the case in which the air bubbles BB are present through a previous measurement and the like and stores the positions in a predetermined storage portion.

However, it is impossible for the image forming apparatus 1 to know the presence or absence of the air bubbles BB and places where the air bubbles BB are formed before the step of forming the picked-up images PC.

Accordingly, the image forming apparatus 1 moves the imaging lens 5 to the standard position Z1 with respect to each imaging point QC to form a standard picked-up image PC1 and moves the imaging lens 5 to an other position Z2 to form an other picked-up image PC2.

Specifically, the image forming apparatus 1 sequentially forms the standard picked-up images PC1 and the other picked-up images PC2 while sequentially positioning the imaging points QC on the optical axis of the imaging lens 5 by controlling the position of the moving stage 4A of the XY stage 4 via the driving control portion 3.

At this time, the image processing portion 10 stores the standard picked-up image PC1 and the other picked-up image PC2 in the storage portion 11 in association with the position information representing the position of each imaging point QC.

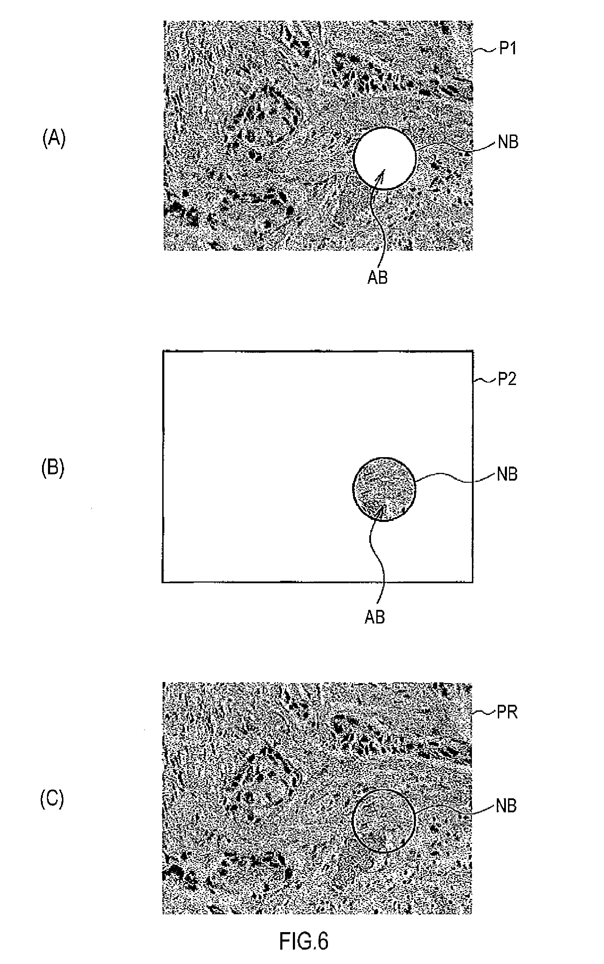

When obtaining the standard picked-up images PC1 and the other picked-up images PC2 with respect to all of the imaging points QC, the image processing portion 10 performs a connecting process of connecting all of the standard picked-up images PC1 to each other by the synthesis processing portion 12 to form a standard image P1 shown in Fig. 6(A).

At this time, in the standard image P1, a part where the air bubbles BB are not present is clear since the focal point FC of the imaging lens 5 is matched with the body tissue 102, but a part where the air bubbles BB are present is blurred since the focal point FC is not matched with the body tissue 102.

In addition, the image processing portion 10 performs a connecting process of connecting all of the other picked-up images PC2 to each other by the synthesis processing portion 12 to form an other image P2 shown in Fig. 6(B).

At this time, opposite to the case of the standard image P1, in the other image P2, a part where the air bubbles BB are present is clear since the focal point FC is matched with the body tissue 102, but a part where the air bubbles BB are not present is blurred since the focal point FC is not matched with the body tissue 102.

Next, the image processing portion 10 determines whether or not the embedding substance 103 contains the air bubbles BB on the basis of the standard image P1 by the air bubble place discrimination portion 13, discriminates the measurement point QM at which the air bubbles BB are present, and supplies the information representing the position thereof as air bubble information to the integrated control portion 2.

In general, when the air bubbles BB are formed in the standard image P1, the boundary line thereof necessarily forms a closed area. In addition, it is known that the boundary line between the embedding substance 103 and the air bubbles BB has a uniform thickness.

Furthermore, since surface tension acts at the boundary surface between the embedding substance 103 and the air bubbles BB when the embedding substance 103 is in the form of a liquid, the curvature of the boundary line between the embedding substance 103 and the air bubbles BB becomes relatively large. In addition, in general, when the focal point FC of the imaging lens 5 is not matched with the body tissue 102, the picked-up image DC becomes a blurred image. In this manner, since the blurred image has low sharpness, the frequency component thereof tends to be low.

In the standard image P1, when a curve NB which forms a closed area AB satisfies predetermined conditions, the air bubble place discrimination portion 13 discriminates the curve NB as a boundary line and determines that the air bubbles BB are present over the area AB.

These conditions are as follows. [First Condition] there is a curve NB which forms a closed area AB, [Second Condition] the line width of the curve NB is in a predetermined range, [Third Condition] the curvature of the curve NB is equal to or less than a predetermined value, and [Fourth Condition] the frequency component of the image in the area AB is very different from that of the area outside of the area AB.

Next, the image processing portion 10 synthesizes a part outside of the area AB in the standard image P1 and a part inside of the area AB in the other image P2 by the synthesis processing portion 12, and thus forms a body tissue image PR shown in Fig. 6(C).

The body tissue image PR is an image which is complemented by substituting a part (that is, inside of the area AB) in which a clear image cannot be obtained due to the presence of air bubbles BB in the standard image P1 with a corresponding part in which a clear image can be obtained in the other image P2.

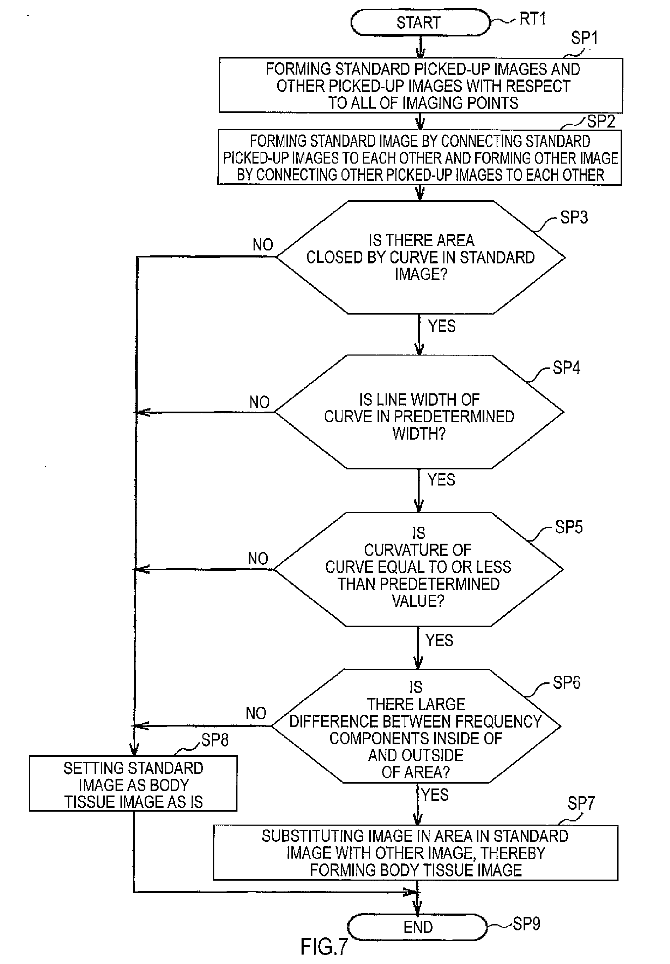

Specifically, the integrated control portion 2 of the image forming apparatus 1 forms the body tissue image PR on the basis of the standard picked-up images PC1 and the other picked-up images PC2 in accordance with the flowchart shown in Fig. 7.

That is, when obtaining a predetermined image forming instruction from an operating portion, exterior equipment or the like (not shown), the integrated control portion 2 starts an image formation procedure RT1 and advances the process to Step SP1.

In Step SP1, the integrated control portion 2 forms the standard picked-up image PC1 and the other picked-up image PC2 with respect to each imaging points QC while appropriately moving the moving stage 4A of the XY stage 4 via the driving control portion 3 and advances the process to the next Step SP2.

In Step SP2, the integrated control portion 2 synthesizes the plurality of standard picked-up images PC1 by the synthesis processing portion 12 of the image processing portion 10 to form one standard image P1, synthesizes the plurality of the other picked-up images PC2 to form one other image P2, and advances the process to the next Step SP3.

In Step SP3, the integrated control portion 2 determines whether or not there is the area AB closed by the curve NB in the standard image P1 by the air bubble place discrimination portion 13 of the image processing portion 10. Herein, when a positive result is obtained, this shows that the [First Condition] is satisfied. At this time, the integrated control portion 2 advances the process to the next Step SP4.

In Step SP4, the integrated control portion 2 determines whether or not the line width of the curve NB in the standard image P1 is in a predetermined range (for example, three pixels to seven pixels, or the like) by the air bubble place discrimination portion 13 of the image processing portion 10. Here, when a positive result is obtained, this shows that the [Second Condition] is satisfied. At this time, the integrated control portion 2 advances the process to the next Step SP5.

In Step SP5, the integrated control portion 2 determines whether or not the curvature of the curve NB is equal to or less than a predetermined value by the air bubble place discrimination portion 13 of the image processing portion 10. Here, when a positive result is obtained, this shows that the [Third Condition] is satisfied. At this time, the integrated control portion 2 advances the process to the next Step SP6.

In Step SP6, the integrated control portion 2 determines whether or not the frequency component of the standard image P1 in the area AB is very different from that outside of the area AB by the air bubble place discrimination portion 13 of the image processing portion 10. Here, when a positive result is obtained, this shows that all of the [First Condition] to the [Fourth Condition] are satisfied. At this time, the integrated control portion 2 advances the process to the next Step SP7.

In Step SP7, the integrated control portion 2 synthesizes a part outside of the area AB in the standard image P1 and a part inside of the area AB in the other image P2 by the synthesis processing portion 12 of the image processing portion 10, and thus forms the body tissue image PR (Fig. 6(C)). Thereafter, the integrated control portion 2 advances the process to Step SP9 to end the image formation procedure RT1.

In addition, when a negative result is obtained in Steps SP3 to SP6, this shows that one or more of the above-described [First Condition] to [Fourth Condition] are not satisfied. At this time, the integrated control portion 2 determines that the air bubbles BB are not present in the standard image P1 and advances the process to the next Step SP8.

In Step SP8, the integrated control portion 2 sets the standard image P1 as the body tissue image PR as is, and then advances the process to Step SP9 to end the image formation procedure RT1.

In this manner, the image processing portion 10 discriminates the area AB in which the air bubbles BB are formed from the standard image P1 on the basis of the control of the integrated control portion 2 and substitutes the image of the area AB with the other image P2, thereby forming the body tissue image PR.

[1-4. Operations and Effects]

In the above-described configuration, the image forming apparatus 1 forms the standard picked-up image PC1 by moving the imaging lens 5 to the standard position Z1 with respect to each imaging points QC, forms the other picked-up image PC2 by moving the imaging lens 5 to the other position Z2, and supplies the images to the image processing portion 10.

The image processing portion 10 performs the connecting process of connecting all of the standard picked-up images PC1 to each other by the synthesis processing portion 12 and forms the standard image P1 (Fig. 6(A)). In addition, the image processing portion 10 performs the connecting process of connecting all of the other picked-up images PC2 to each other by the synthesis processing portion 12 and forms the other image P2 (Fig. 6(B)).

Next, the image processing portion 10 determines whether or not the air bubbles BB are contained in the embedding substance 103 by the air bubble place discrimination portion 13 on the basis of the standard image P1. Here, when the air bubbles BB are contained in the embedding substance 103, the image processing portion 10 substitutes the standard image P1 with the other image P2 by the synthesis processing portion 12, and thus forms the body tissue image PR (Fig. 6(C)).

In this manner, the image forming apparatus 1 can form the body tissue image PR which is nearly completely clear even when the standard image P1 is partially unclear due to the presence of the air bubbles BB.

Here, in the pathology slide 100, when the thickness of the embedding substance 103 is about 10 [$\mu$m], the focusing position when the air bubbles BB are present is uniformly different by about 5 [$\mu$m] from the focusing position when the air bubbles BB are not present due to action such as surface tension of the embedding substance 103 (Fig. 3(A)).

Accordingly, the part which is unclear due to the effect of the air bubbles BB in the standard image PC1 picked-up at the standard position Z1 is clearly displayed in the other image PC2 picked-up at the other position Z2 which is distant from the standard position Z1 by about 5 [$\mu$m].

The image forming apparatus 1 using this relationship just specifies the place where the air bubbles BB are present in the standard image PC1 and just substitutes only the part where the air bubbles BB are present with the other image PC2, thereby can obtain the body tissue image PR which is nearly completely clear regardless of the presence or absence and the position of the air bubbles BB.

At this time, the image forming apparatus 1 may just synthesize two kinds of images which are the standard image PC1 and the other image PC2. Accordingly, the image forming apparatus 1 may just form two picked-up images with respect to each imaging point QC, and a time which is required for the imaging process, such as the movement of the imaging lens 5 in the Z direction, can be minimized.

In addition, since the image forming apparatus 1 can discriminate the presence or absence and the position of the air bubbles BB from the standard image PC1, the entire apparatus can be simply configured with no need to provide a separate optical component for discriminating the presence or absence and the position of the air bubbles BB.

At this time, since the air bubble determination portion 13 of the image processing portion 10 can discriminate the air bubbles BB with high accuracy by combining the [First Condition] to [Fourth Condition], the risk of making the body tissue image PR blurred due to a mistake in discrimination of the air bubbles BB is extremely low.

As a result, it is possible to prevent problems, including that the body tissue 102 cannot be correctly observed due to the presence of the air bubbles BB in the diagnosis or the like, from occurring by using the body tissue image PR which is formed by the image forming apparatus 1. In this manner, it is possible to suppress the occurrence of problems, including that the pathology slide 100 is re-imaged to form the body tissue image PR over again and that a new body tissue image PR is formed by using another pathology slide 100.

Furthermore, the image processing portion 12 intentionally leaves the curve NB in the body tissue image PR. Accordingly, there is no concern that, for example, when the curve NB is removed in the body tissue image PR, the diagnosis or the like is adversely affected by unnaturalness of the image with a removal trace. In addition, the body tissue image PR can actively notify of the synthesis of the image of a part corresponding to the air bubbles BB and can allow a diagnosis or the like to be given after recognition of the synthesis.

According to the above-described configuration, the image forming apparatus 1 connects the standard picked-up images PC1 at the standard positions Z1 to each other and connects the other picked-up images PC2 at the other positions Z2 to each other with respect to the imaging points QC, and thus form the standard image P1 and the other picked-up image PC2. In addition, the image forming apparatus 1 determines whether or not the air bubbles BB are contained in the embedding substance 103 on the basis of the standard image P1 and substitutes the standard image P1 with the other image P2 in a part where the air bubbles BB are contained to form the body tissue image PR. In this manner, the image forming apparatus 1 can form the body tissue image PR which is nearly completely clear.

<2. Second Embodiment>

Similarly to the first embodiment, the pathology slide 100 is an imaging target in a second embodiment. Accordingly, the description of the configuration of the pathology slide 100 will be omitted (Figs. 1 to 3).

In the second embodiment, the cover distance DC is assumed to be not constant and to differ for each other.

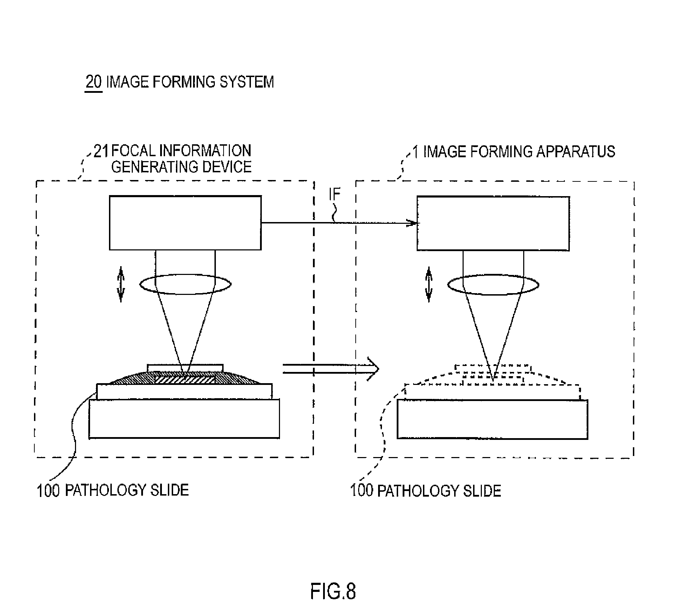

Accordingly, in the second embodiment, an image forming system 20 which is constituted of the same image forming apparatus 1 as in the first embodiment and a focal information generating device 21 as shown in Fig. 8 generates a body tissue image PR.

The focal information generating device 21 detects standard positions Z1 and other positions Z2 with respect to the measurement points QM (Fig. 5) which are set at predetermined intervals in the pathology slide 100.

In the pathology slide 100, for example, the imaging range AC is set to be an about 1- [mm] square, and thus the imaging points QC are also arranged at intervals of about 1 [mm] and the measurement points QM are arranged at intervals of about 250 [$\mu$m].

The focal information generating device 21 associates the information representing the standard position Z1 and the other position Z2 with the information representing the measurement point QM to generate focal information IF and supplies the information IF to the image forming apparatus 1.

In response to this, the image forming apparatus 1 sequentially picks-up the standard picked-up image PC1 and the other picked-up image PC2 while controlling the position of the imaging lens 5 on the basis of the focal information IF, and finally forms the body tissue image PR.

[2-1. Configuration of Focal Point Position Detecting Device

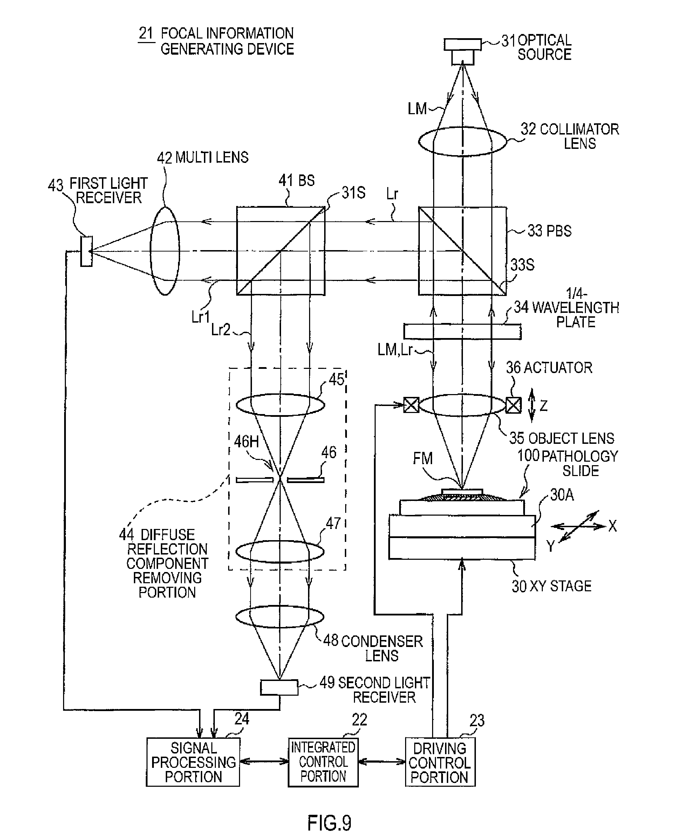

As shown in Fig. 9, in the focal information generating device 21, an integrated control portion 22 performs overall integrated control.

The integrated control portion 22 is constituted of a CPU (not shown), a ROM which stores various programs and the like, and a RAM which is used as a working memory of the CPU.

When the focal information IF is generated, the integrated control portion 22 emits an optical beam LM, which is divergent light of a predetermined wavelength, from an optical source 31 formed of a laser diode or the like, and converts the optical beam LM into parallel light by a collimator lens 32. The light enters a polarizing beam splitter (PBS) 33.

The polarizing beam splitter 33 transmits nearly all of the optical beams which are P-polarized light and reflects nearly all of the optical beams which are S-polarized light by a reflection-transmission surface 33S of which the transmittance varies in accordance with the direction of polarization of the light.

The actual polarizing beam splitter 33 transmits nearly all of the optical beams LM by the reflection-transmission surface 33S and makes the beams incident on a 1/4-wavelength plate 34.

The 1/4-wavelength plate 34 can convert the light between linearly polarized light and circularly polarized light. For example, the 1/4-wavelength plate 34 can convert the optical beam LM which is the P-polarized light into left-handed circularly polarized light and makes the light incident on an object lens 35.

The object lens 35 has the same optical characteristics as those of the imaging lens 5 of the image forming apparatus 1 and condenses and emits the optical beams LM to the pathology slide 100. In addition, under the control of the integrated control portion 22 and a driving control portion 23, the object lens 35 is moved in the direction (hereinafter, referred to as the Z direction) along the optical axis of the optical beam LM by an actuator 36, and accompanying this, a focal point FM of the optical beam LM can be moved in the Z direction. The position of the object lens 35 in the Z direction corresponds to the position of the imaging lens 5 in the Z direction.

An XY stage 30 has the same configuration as that of the XY stages 4 of the image forming apparatus 1. That is, the XY stage 30 can be moved in the horizontal direction (hereinafter, referred to as the X direction) of the drawing and in the direction toward the front or real side (hereinafter, referred to as the Y direction) in a state in which the pathology slide 100 is fixed to a predetermined moving stage 30A.

The actual integrated control portion 22 has and supplies measurement point position information according to the position of the measurement point QM to the driving control portion 23. In response to this, the driving control portion 23 generates a position control signal on the basis of the measurement point position information and supplies the signal to the XY stage 30 to move the moving stage 30A to which the pathology slide 100 is fixed in the X and Y directions.

As a result, the XY stage 30 can match the optical axis (shown by the dashed line in the drawing) of the optical beam LM with the measurement point QM in the pathology slide 100.

The optical beam LM is reflected from the pathology slide 100 and becomes a reflected optical beam Lr. At this time, the reflected optical beam Lr is right-handed circularly polarized light because the rotation direction of the circularly polarized light is reversed. The reflected optical beam Lr advances in the direction opposite to that of the optical beam LM, is converted into linearly polarized light by the object lens 35, and enters the 1/4-wavelength plate 34.

The 1/4-wavelength plate 34 converts the reflected optical beam Lr which is right-handed circularly polarized light into S-polarized light (that is, linearly polarized light) and makes the light incident on the polarizing beam splitter 33.

The polarizing beam splitter 33 reflects nearly all of the reflected optical beams Lr which are S-polarized light by the reflection-transmission surface 33S and makes the light incident on a beam splitter (BS) 41.

The beam splitter 41 transmits about 50% of the optical beams by a reflection-transmission surface 31S and reflects the remaining about 50% of the optical beams. The actual beam splitter 41 transmits about 50% of the reflected optical beams Lr to emit first reflected optical beams Lr1 and makes the optical beams incident on a multi lens 42.

The multi lens 42 condenses the first reflected optical beams Lr1 and gives astigmatism thereto to emit the optical beams to a first light receiver 43.

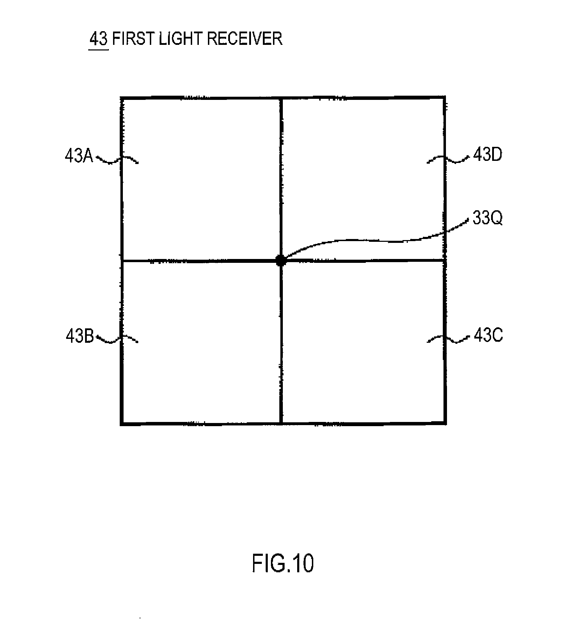

As shown in Fig. 10, the first light receiver 43 has four light-receiving areas 43A, 43B, 43C, and 43D which are arranged in a grid-like pattern, and the installation positions thereof are adjusted so that the optical axis of the first reflected optical beam Lr1 is positioned at a center point 33Q of the first light receiver 43.

The light-receiving areas 43A, 43B, 43C, and 43D of the first light receiver 43 receive some of the first reflected optical beams Lr1, generate first light-receiving signals S1A, S1B, SIC, and S1D, each based on the amount of light received, respectively, and supplies the light-receiving signals to a signal processing portion 24.

In addition, the beam splitter 41 transmits about 50% of the reflected optical beams Lr to emit second reflected optical beams Lr2 and makes the optical beams incident on a diffuse reflection component removing portion 44.

The diffuse reflection component removing portion 44 is constituted of a condenser lens 45, a pinhole plate 46, and a collimator lens 47.

The condenser lens 45 condenses the second reflected optical beams Lr2 and emits the optical beams to the pinhole plate 46. The pinhole plate 46 has a fine passing hole 46H which is provided around the optical axis of the second reflected optical beam Lr2 in the vicinity of the focal point of the second reflected optical beam Lr2.

The second reflected optical beams Lr2 which are condensed by the condenser lens 45 pass through the passing hole 46H of the pinhole plate 46. Then, the light becomes divergent light and enters the collimator lens 47. At this time, the optical beams other than those condensed by the condenser lens 45 in the vicinity of the focal point among the second reflected optical beams Lr2 are blocked by the pinhole plate 46.

The collimator lens 47 converts the second reflected optical beam Lr2 into parallel light and makes the light incident on a condenser lens 48. The condenser lens 48 condenses the second reflected optical beams Lr2 and makes the optical beams incident on a second light receiver 49.

The second light receiver 49 generates a second light receiving signal S2 based on the light intensity of the second reflected optical beams Lr2 and supplies the signal to the signal processing portion 24.

The signal processing portion 24 generates focal information IF related to the measurement point QM by performing a focal information generating process to be described later.

In this manner, in the focal information generating device 21, the pathology slide 100 is irradiated so that the optical axis of the optical beam LM is matched with the measurement point QM, and the reflected optical beam Lr, which is generated at this time, is separated into the first reflected optical beam Lr1 and the second reflected optical beam Lr2. Then, the focal information generating device 21 gives astigmatism to and receives the first reflected optical beam Lr1, and receives the second reflected optical beam Lr2 having passed through the passing hole 46H of the pinhole plate 46.

[2-2. Generation of Focal Information]

Next, the generation of the focal information IF with respect to each measurement point QM will be described.

[2-2-1. When Air Bubbles are not Contained]

While generating the first light-receiving signals S1A to S1D and the second light-receiving signal S2 by the first light receiver 43 and the second light receiver 49, the integrated control portion 22 moves the object lens 35 by the actuator 36 at a constant speed in the Z direction so as to bring the object lens closer to the pathology slide 100 from a position distant therefrom.

At this time, the signal processing portion 24 generates a sum signal SS in accordance with the following Expression (1) on the basis of the first light-receiving signals S1A to S1D generated by the first light receiver 43 and supplies the sum signal SS to the integrated control portion 22. This sum signal SS represents the entire light intensity of the first reflected optical beams Lr1.

$$SS=S1A+S1B+S1C+S1D \qquad ...(1)$$

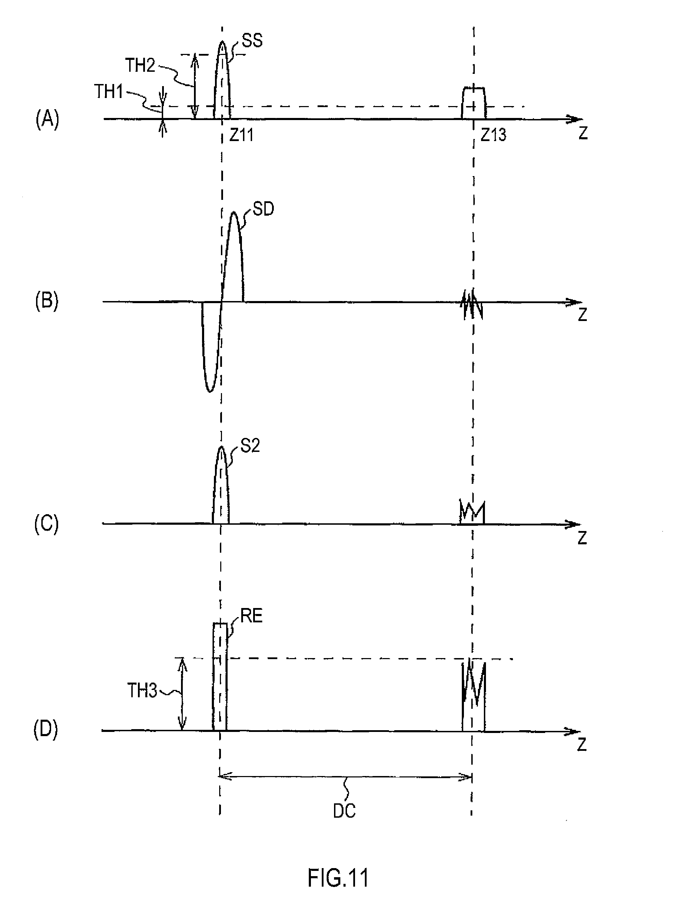

Here, the case in which the air bubbles BB are not contained in the embedding substance 103 is assumed, as shown in Figs. 2 (A) and 2(B). At this time, as shown in Fig. 11(A), the value of the sum signal SS varies in accordance with the position of the object lens 35 in the Z direction.

Here, the actuator 36 moves the object lens 35 at a constant speed. Accordingly, the horizontal axis in Fig. 11 represents the time axis and also represents the relative positions of the object lens 35 in the Z direction, that is, the relative positions of the focal point FM in the Z direction.

As can be seen from Fig. 11(A), in the case of the sum signal SS, a peak waveform of a relatively high signal level is formed around a position Z11. In addition, a peak waveform of a medium signal level is formed around a position Z13.

The peak in this sum signal SS shows that the optical beam LM is reflected at the relatively high reflectance, that is, shows that the focal point FM of the optical beam LM is positioned at the boundary surface between two kinds of materials having different refractive indexes from each other.

In the pathology slide 100, the refractive index (about 1.5) of the cover glass 104 is very different from the refractive index (about 1) of the surrounding air in the upper surface 104A. Accordingly, the peak around the position Z11 in the sum signal SS shows that at this time, the focal point FM of the optical beam LM is positioned in the upper surface 104A of the cover glass 104.

In addition, the peak around the position Z13 shows that the optical beam LM is reflected at the relatively low reflectance. That is, this peak shows that at this time, the focal point FM of the optical beam LM is positioned in a material which has a relatively low optical transmittance and partially reflects the light, that is, in the body tissue 102.

The refractive indexes of both of the cover glass 104 and the embedding substance 103 are about 1.5 and nearly the same as each other. Accordingly, the optical beam LM is rarely reflected at the boundary surface between the cover glass 104 and the embedding substance 103.

In this manner, in the sum signal SS, a high peak is shown when the object lens 35 is at the position Z11 and the focal point FM of the optical beam LM is positioned in the upper surface 104A of the cover glass 104. In addition, in the sum signal SS, a peak of a medium level is shown when the object lens 35 is at the position Z13 and the focal point FM is positioned in the body tissue 102.

In addition, the signal processing portion 24 generates, from the following Expression (2), a difference signal SD as a diagonal difference value between the values to which the light-receiving signals due to the light-receiving areas which are diagonally arranged in the first light receiver 43 are added, respectively, and supplies the difference signal to the integrated control portion 22.

$$SD=(S1A+S1C)-(S1B+S1D) \qquad ...(2)$$

In Expression (2), the difference signal SD is calculated through the same calculation principle as that for the focus error signal based on an astigmatic method in an optical disc device.

As shown in Fig. 11(B) corresponding to Fig. 11(A), the value of this difference signal SD varies in accordance with the position of the object lens 35 in the Z direction as in the case of the sum signal SS.

As can be seen from Fig. 11(B), in the case of the difference signal SD, a so-called S-curve is formed in which positive and negative peaks of a relatively high signal level are continuously shown around the position Z11.

In the S-curve of the difference signal SD, the positive and negative peaks are shown so as to interpose the position Z11 therebetween and the value is "0" at the position Z11. This shows that when the object lens 35 is at the position Z11, the focal point FM of the optical beam LM is positioned in the upper surface 104A of the cover glass 104.

In addition, the value of the difference signal SD in the vicinity of the position Z13 varies. This shows that the optical beam LM is randomly reflected at the relatively low reflectance. It is thought that at this time, the focal point FM of the optical beam LM is positioned in a material which has a relatively low optical transmittance and partially reflects the light, that is, in the body tissue 102.

However, in the focal information generation device 21, when the optical beam LM is reflected by a uniform surface, such as the upper surface 104A or a lower surface 104B of the cover glass 104, the optical beam LM is nearly uniformly reflected. Accordingly, the reflected optical beam Lr includes almost no diffuse reflection components.

In addition, in the focal information generating device 21, the reflected optical beam Lr is separated into the first and second reflected optical beams Lr1 and Lr2 in the beam splitter 41 so that the light intensity of the reflected optical beam Lr is divided in about half. Accordingly, the light intensities of the first and second reflected optical beams Lr1 and Lr2 immediately after emission from the beam splitter 41 are nearly the same.

When condensed by the condenser lens 45, the second reflected optical beam Lr2 includes almost no diffuse reflection components, whereby nearly all of the components are condensed at the focal point. Accordingly, the second reflected optical beam Lr2 passes by the passing hole 46H of the pinhole plate 46 almost without being blocked.

As a result, the light intensity of the second reflected optical beam Lr2 reaching the second light receiver 49 becomes equal to the light intensity of the first reflected optical beam Lr1 reaching the first light receiver 43.

Meanwhile, since the structures of cells and the like which are included in the body tissue 102 are not uniform, the body tissue 102 diffusely reflects some of the optical beams LM.

Accordingly, diffuse reflection components are included in the reflected optical beam Lr reflected by the body tissue 102. The beam splitter 41 separates the reflected optical beam Lr including these diffuse reflection components into the first reflected optical beam Lr1 and the second reflected optical beam Lr2. That is, the first and second reflected optical beams Lr1 and Lr2 also include the diffuse reflection components.

The first light receiver 43 receives the first reflected optical beam Lr1 including the diffuse reflection components without being attenuated or blocked in the middle.

The diffuse reflection components which are included in the second reflected optical beam Lr2 are condensed to some extent when condensed by the condenser lens 45, but in the vicinity of the focal point thereof, these are not necessarily condensed. Accordingly, the diffuse reflection components of the second reflected optical beam Lr2 are blocked by the pinhole plate 46 of the diffuse reflection component removing portion 44.

As a result, the diffuse reflection components of the second reflected optical beam Lr2 reaching the second light receiver 49 are removed. Accompanying this, the light intensity of the second reflected optical beam Lr2 reaching the second light receiver 49 is smaller than the light intensity of the first reflected optical beam Lr1 reaching the first light receiver 43.

Accordingly, when the object lens 35 is moved in the Z direction so as to be brought closer to the pathology slide 100 in which the air bubbles BB are not contained in the embedding substance 103, the second light-receiving signal S2 which is generated by the second light receiver 49 forms a signal waveform shown in Fig. 11(C).

In this Fig. 11(C), in the case of the second light-receiving signal S2, a peak waveform of the same signal level as in Fig. 11(A) is formed around the position Z11. However, a small peak waveform of a lower signal level than in Fig. 11(A) is formed around the position Z13.

That is, when the object lens 35 is at the position Z11, the focal point FM of the optical beam LM is positioned in the upper surface 104A of the cover glass 104, and the reflected optical beam Lr includes almost no diffuse reflection components. Accordingly, the second light-receiving signal S2 has the same signal level as that of the sum signal SS.

When the object lens 35 is at the position Z13, the focal point FM of the optical beam LM is positioned in the body tissue 102, and the reflected optical beam Lr includes diffuse reflection components to some extent. Accordingly, the second light-receiving signal S2 has a lower signal level than the sum signal SS.

Here, the value which is obtained by dividing the second light-receiving signal S2 by the sum signal SS as in the following Expression (3) represents the ratio of components (hereinafter, referred to as uniform reflection components) other than the diffuse reflection components in the reflected optical beam Lr. Hereinafter, this ratio will be referred to as a uniform reflectance RE.

$$RE = S2/SS \qquad \dots (3)$$

As shown in Fig. 11(D), this uniform reflectance RE becomes a relatively high value when the optical beam LM is reflected at the uniform boundary surface, and becomes a relatively low value when the optical beam LM is partially diffusely reflected, that is, when the focal point FM of the optical beam LM is in the body tissue 102.

The signal processing portion 24 calculates the uniform reflectance RE in accordance with this Expression (3) and supplies the result to the integrated control portion 22.

When the sum signal SS is larger than a predetermined threshold TH2 (Fig. 11(A)) and the uniform reflectance RE is smaller than a predetermined threshold TH3 (Fig. 11(D)), the integrated control portion 22 determines that the focal point FM of the optical beam LM is matched in the body tissue 102. The thresholds TH2 and TH3 are appropriately set on the basis of the test result and the like.

The integrated control portion 22 sets the position Z13 of the object lens 35 at this time as the standard position Z1 where the focal point FC of the imaging lens 5 can be matched with the body tissue 102 when the air bubbles BB are not contained in the embedding substance 103.

[2-2-2. Waveform of Each Signal When Air Bubbles are Included]

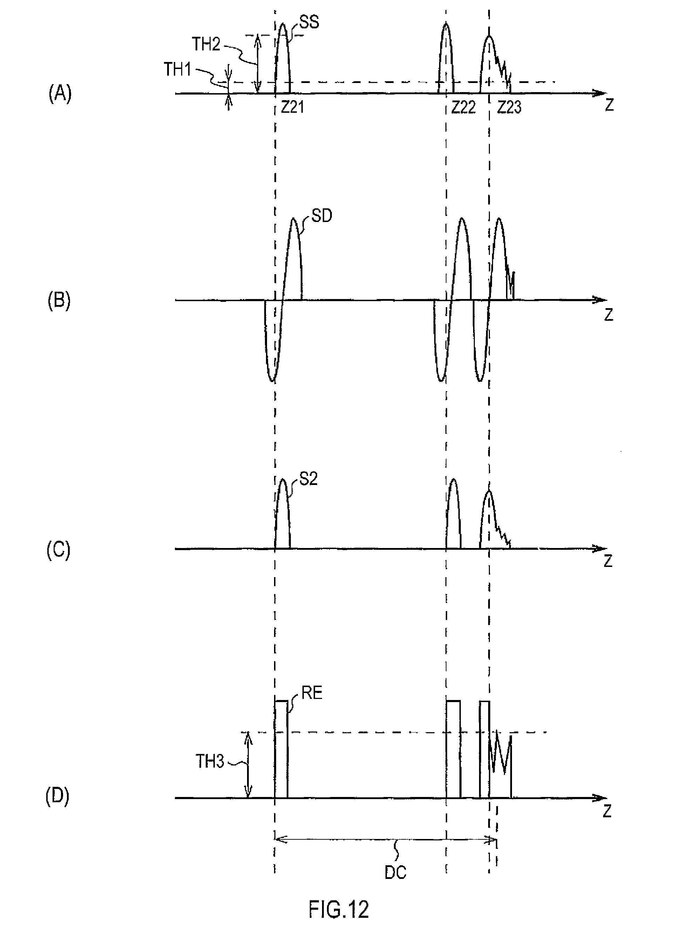

On the other hand, when the air bubbles BB are contained in the embedding substance 103 (Figs. 3(A) and 3 (B)), the waveforms of the sum signal SS and the difference signal SD are different from those of the case in which the air bubbles BB are not contained as shown in Figs. 12 (A) and 12 (B) corresponding to Figs. 11(A) and 11(B).

In addition, the waveforms of the second light-receiving signal S2 and the uniform reflectance RE are also different from those of the case in which the air bubbles BB are not contained as shown in Figs. 12(C) and 12(D) corresponding to Figs. 11(C) and 11(D).

In the case of the sum signal SS in Fig. 12(A), the same waveform as in Fig. 11 (A) is formed in the vicinity of a position Z21 corresponding to the position Z11. However, differently from Fig. 11(A), the sum signal SS forms the same peak waveform as that in the vicinity of the position Z21 in the vicinity of a position Z22. In addition, the sum signal SS forms a slightly smaller peak waveform than the peak in the vicinity of the position Z21 in the vicinity of a position Z23 and the signal level partially varies.

The peak which is formed in the vicinity of the position Z22 is thought to result from the boundary surface between the lower surface 104B of the cover glass 104 and the air bubbles BB (Fig. 3(A)). In addition, the peak which is formed in the vicinity of the position Z23 is thought to result from the boundary surface between the air bubbles BB and the body tissue 102.

That is, when the air bubbles BB are contained in the embedding substance 103, the peaks, which will be not formed when the air bubbles BB are not contained, are shown at the positions Z22 and Z23 in the sum signal SS.

In addition, the waveform of the difference signal SD in the vicinity of the position Z21 in Fig. 12(B) is the same as that in the vicinity of the position Z11 in Fig. 11(B). However, differently from Fig. 11(B), the waveform of the difference signal SD forms the same S-curve as that in the vicinity of the position Z21 in the vicinities of the position Z22 and the position Z23.

That is, when the air bubbles BB are contained in the embedding substance 103, the S-curves, which will not be formed when the air bubbles BB are not contained, are shown at the positions Z22 and Z23, respectively, in the difference signal SD.

Furthermore, the waveform of the second light-receiving signal S2 in Fig. 12(C) is nearly the same as that of the sum signal SS at the positions Z21, Z22 and Z23. However, the signal level of the variation part at the position Z23 is slightly low.

That is, when the object lens 35 is at the position Z21, the focal point FM of the optical beam LM is positioned in the upper surface 104A of the cover glass 104 and the reflected optical beam Lr includes almost no diffuse reflection components. Accordingly, the second light-receiving signal S2 has nearly the same signal level as that of the sum signal SS.

When the object lens 35 is in the vicinity of the position Z23, the focal point FM of the optical beam LM is positioned in the body tissue 102 and the reflected optical beam Lr includes diffuse reflection components to some extent. These diffuse reflection components are removed by the diffuse reflection component removing portion 44. Accordingly, the second light-receiving signal S2 has a lower signal level than the sum signal SS. In response to this, the waveform of the uniform reflectance RE (Fig. 12(D)) is lower than the values at the positions Z21 and Z22 in the vicinity of the position Z23.

Accordingly, first, when the difference signal SD (Fig. 12(B)) forms the S-curve at the positions Z22 and Z23 other than the position Z21, the integrated control portion 22 determines that the air bubbles BB are present.

Next, the integrated control portion 22 sets a position where the sum signal SS is larger than the threshold TH2 (Fig. 12(A)) and the uniform reflectance RE is smaller than the threshold TH3 (Fig. 12(D)) as the position Z23. At this time, the integrated control portion 22 sets the position Z23 as the other position Z2 where the focal point FC of the imaging lens 5 can be matched with the body tissue 102 when the air bubbles BB are contained in the embedding substance 103.

[2-2-3. Focal Point Position Detection Procedure]

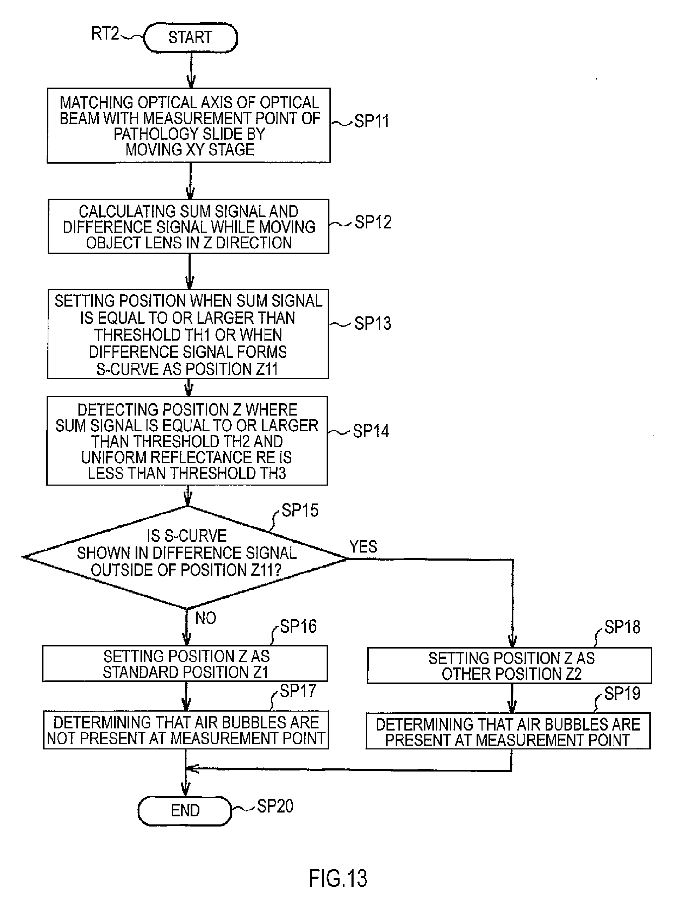

The actual integrated control portion 22 performs a focal point position detecting process in accordance with the flowchart shown in Fig. 13.

That is, the integrated control portion 22 starts a focal point position detection procedure RT2 on the basis of an operation instruction or the like from an operating portion (not shown), and advances the process to Step SP11.

In Step SP11, the integrated control portion 22 moves the moving stage of the XY stage 30 via the driving control portion 23 to match the optical axis of the optical beam LM with the measurement point QM of the pathology slide 100, and advances the process to the next Step SP12.

In Step SP12, the integrated control portion 22 calculates the sum signal SS and the difference signal SD by the signal processing portion 24 while moving the object lens 35 in the Z direction by the actuator 36 via the driving control portion 23, and advances the process to the next Step SP13.

In Step SP13, the integrated control portion 22 sets the position of the object lens 35 when the value of the sum signal SS is initially larger than the threshold TH1 or when the difference signal SD forms an S-curve as the position Z11, and advances the process to the next Step SP14.

At this time, the position Z11 represents the same position as the position Z21 and is a position where the focal point FM of the optical beam LM is matched with the upper surface 104A of the cover glass 104.

In Step SP14, the integrated control portion 22 detects a position Z where the sum signal SS is equal to or larger than the threshold TH2 and the uniform reflectance RE is less than the threshold TH3, and advances the process to the next Step SP15.

In Step SP15, the integrated control portion 22 determines whether or not an S-curve is shown at a position other than the position Z11 in the difference signal SD, that is, whether or not both of the positive and negative peaks are shown. Here, when a negative result is obtained, this shows that the air bubbles BB cannot be detected at the measurement point QM, and at this time, the integrated control portion 22 advances the process to the next Step SP16.

In Step SP16, the integrated control portion 22 sets the position Z detected in Step SP14 as the standard position Z1, generates the focal information IF in which the information representing the measurement point QM is associated with the information representing the standard position Z1, and advances the process to the next Step SP17.

In Step SP17, the integrated control portion 22 determines that the air bubbles BB are not present at the measurement point QM, generates the air bubble information IB in which the information representing the measurement point QM is associated with the information representing that the air bubbles BB are not present, and advances the process to the next Step SP20 to end the focal point position detection procedure RT2.

On the other hand, when a positive result is obtained in Step SP15, this shows that the air bubbles BB can be detected at the measurement point QM, and at this time, the integrated control portion 22 advances the process to the next Step SP18.

In Step SP18, the integrated control portion 22 sets the position Z detected in Step SP14 as the other position Z2, generates the focal information IF in which the information representing the measurement point QM is associated with the information representing the other position Z2, and advances the process to the next Step SP19.

In Step SP19, the integrated control portion 22 determines that the air bubbles BB are present at the measurement point QM, generates the air bubble information IB in which the information representing the measurement point QM is associated with the information representing the presence of the air bubbles BB, and advances the process to Step SP20 to end the focal point position detection procedure RT2.

The integrated control portion 22 performs the focal point position detection procedure RT2 on the plurality of measurement points QM and generates the focal information IF and the air bubble information IB with respect to each measurement point QM.

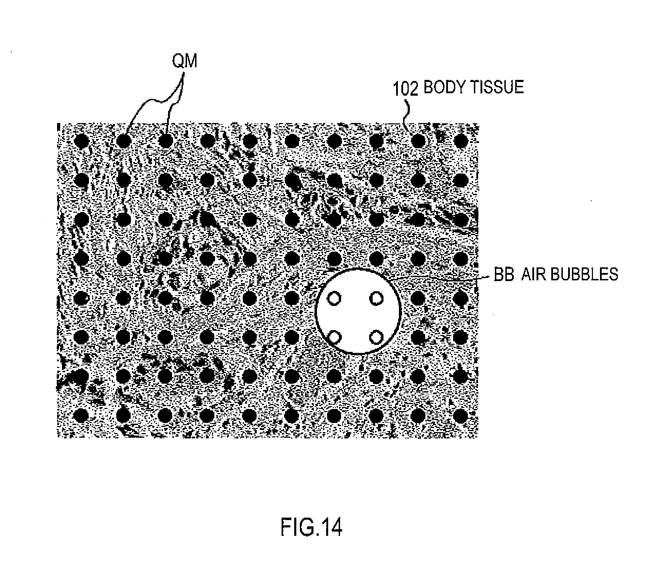

This air bubble information IB is, for example, information in which a place where the air bubbles BB are present can be specified in the pathology slide 100 as shown in Fig. 14. In Fig. 14, a black circle represents the measurement point QM at which the air bubbles BB are not present and a white circle represents the measurement point QM at which the air bubbles BB are present.

In this manner, the integrated control portion 22 determines the presence or absence of the air bubbles BB at each measurement point QM on the basis of the sum signal SS and the difference signal SD, and then detects the standard position Z1 or the other position Z2 to generate the focal information IF and the air bubble information IB.

[2-3. Formation of Body Tissue Image]

As described above, in the image forming system 20, the image forming apparatus 1 forms a body tissue image PR on the basis of the focal information IF and the air bubble information IB supplied from the focal information generating device 21.

However, in the second embodiment, the integrated control portion 2 of the image forming apparatus 1 calculates the standard position Z1 and the other position Z2 with respect to each imaging point QC on the basis of the standard position Z1 and the other position Z2 detected with respect to each measurement point QM.

The integrated control portion 2 can calculate the standard position Z1 of the imaging point QC by, for example, taking an average value of the standard positions Z1 which are detected with respect to all of the measurement points QM included in the range of the imaging range AC (Fig. 5). In addition, the integrated control portion 2 can also calculate the other position Z2 of the imaging point QC in the same manner.

In addition, the integrated control portion 2 determines whether or not the air bubbles BB are present in the standard image P1 on the basis of the air bubble information IB, specifies an approximate position of the air bubbles BB, and then detects the specific position of the air bubbles BB in the standard image P1.

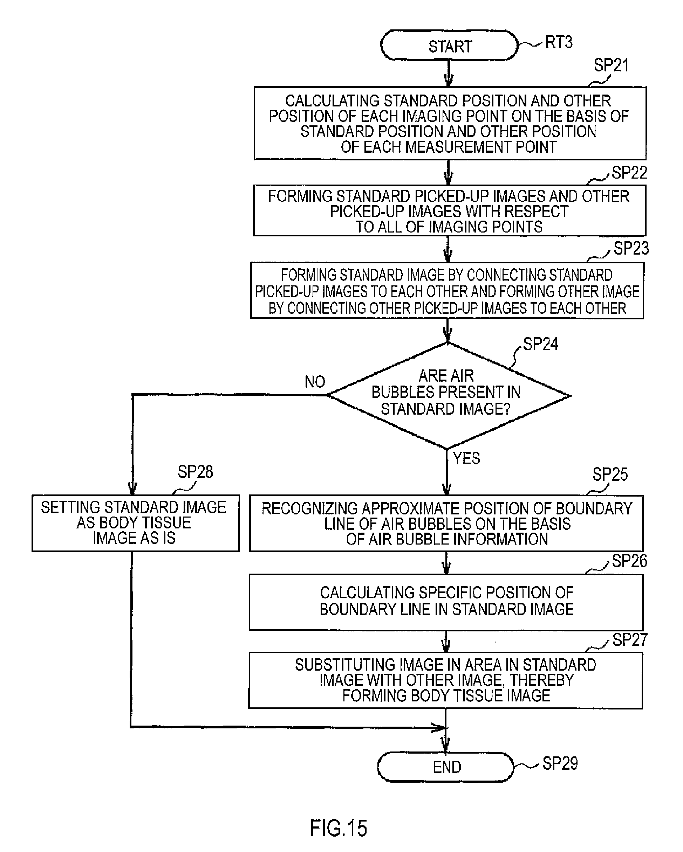

Specifically, the integrated control portion 2 of the image forming apparatus 1 forms a body tissue image PR on the basis of the standard picked-up images PC1 and the other picked-up images PC2 in accordance with the flowchart of Fig. 15 corresponding to Fig. 7.

That is, when obtaining a predetermined image forming instruction from an operating portion (not shown), exterior equipment or the like, the integrated control portion 2 starts an image formation procedure RT3 and advances the process to Step SP21.

In Step SP21, the integrated control portion 2 calculates the standard position Z1 and the other position Z2 of each imaging point QC on the basis of the standard position Z1 and the other position Z2 for the measurement point QM obtained as the focal information IF, and advances the process to the next Step SP22.

In Step SP22, the integrated control portion 22 forms the standard picked-up image PC1 and the other picked-up image PC2 with respect to each imaging point QC while appropriately moving the moving stage 4A of the XY stage 4 via the driving control portion 3, and advances the process to the next Step SP23.

In Step SP23, the integrated control portion 2 forms one standard image P1 by connecting the plurality of standard picked-up images PC1 by the synthesis processing portion 12 of the image processing portion 10, generates one other image P2 by connecting the plurality of other picked-up images PC2 to each other, and advances the process to the next Step SP24.

In Step SP24, the integrated control portion 2 determines whether or not the standard image P1 includes the air bubbles BB on the basis of the air bubble information IB. Here, when a positive result is obtained, this shows that it is necessary to form a body tissue image PR by synthesizing the standard image P1 and the other image P2. At this time, the integrated control portion 2 advances the process to the next Step SP25.

In Step SP25, the integrated control portion 2 recognizes an approximate position of the boundary line between the air bubbles BB and the embedding substance 103 on the basis of the position information of the measurement point QM at which the air bubbles BB are present by using the air bubble information IB and advances the process to the next step SP26

For example, when the air bubbles BB are present at only one of two measurement points QM adjacent to each other, the integrated control portion 2 can recognize that the boundary line is present between the two measurement points QM.

In Step SP26, the integrated control portion 2 calculates the specific position of the boundary line in the standard image P1 on the basis of the recognized approximate position, and advances the process to the next Step SP27.

In Step SP27, the integrated control portion 2 synthesizes a part outside of the boundary line in the standard image P1 and a part inside of the boundary line in the other image P2 by the synthesis processing portion 12 of the image processing portion 10, and thus forms a body tissue image PR (Fig. 6(C)). Thereafter, the integrated control portion 2 advances the process to Step SP29 to end the image formation procedure RT3.

On the other hand, when a negative result is obtained in Step SP24, this shows that it is not necessary to synthesize the standard image P1 and the other image P2. At this time, the integrated control portion 2 advances the process to the next Step SP28.

In Step SP28, the integrated control portion 2 sets the standard image P1 as the body tissue image PR as is, and then advances the process to Step SP29 to end the image formation procedure RT3.

As a result, even when the focusing position in the pathology slide 100 is not fixed, the image forming apparatus 1 forms the standard image P1 and the other image P2 in which the focal point is matched for each part, and can form the clear body tissue image PR.

[2-4. Operations and Effects]

In the above-described configuration, in the image forming system 20, the focal information generating device 21 detects the standard position Z1 or the other position Z2 for each measurement point QM to generate the focal information IF and the air bubble information IB.

In response to this, the image forming apparatus 1 obtains the standard position Z1 and the other position Z2 of each imaging point QC on the basis of the standard position Z1 and the other position Z2 of each measurement point QM, forms the standard picked-up image PC1 and the other picked-up image PC2, and supplies the images to the image processing portion 10.

The image processing portion 10 performs a connecting process of connecting the standard picked-up images PC1 at the imaging points QC to each other and connecting the other picked-up images PC2 to each other by the synthesis processing portion 12 to form the standard image P1 and the other image P2.

Next, the image processing portion 10 determines whether or not the air bubbles BB are contained in the embedding substance 103 by the air bubble place discrimination portion 13 on the basis of the standard image P1. Here, when the air bubbles BB are contained in the embedding substance 103, the image processing portion 10 substitutes the standard image P1 with the other image P2 by the synthesis processing portion 12 to form the body tissue image PR.

In this manner, the image forming system 20 can form the body tissue image PR which is nearly completely clear even when the standard image P1 is partially unclear due to the presence of the air bubbles BB.

However, when the air bubbles BB are contained in the embedding substance 103, the reflectance of the boundary surface between the air bubbles BB and the cover glass 104 or the body tissue 102 becomes relatively high. Accompanying this, the values of the sum signal SS and the difference signal SD form a peak or an S-curve which does not exist when the air bubbles BB are not contained (Figs. 9(A) and 9(B)).

In the pathology slide 100, the optical beam LM is partially diffusely reflected only in the body tissue 102 and the diffuse reflection almost does not occur in other boundary surfaces. Accordingly, in the focal information generating device 21, the light intensity of the second reflected optical beam Lr2 in which the diffuse reflection components are removed by the diffuse reflection component removing portion 44 is lower than the light intensity of the first reflected optical beam Lr1 only when the focal point of the optical beam LM is in the body tissue 102.

Accordingly, the focal information generating device 21 uses the uniform reflectance RE representing the ratio of the second signal to the sum signal SS as a determination index, and thus can reliably detect the position Z where the focal point FM of the optical beam LM is in the body tissue 102, that is, the standard position Z1 or the other position Z2.

Particularly, the speed of image data reading from each pixel is relatively low when a CMOS imaging element is used in the imaging portion 8. Accordingly, when a focal point adjustment process using the image data is performed, it is thought that a lot of time is required in the focusing process.

In addition, when NA is, for example, 0.8, the depth of focus of the imaging lens 5 is extremely shortened to be about 1 [$\mu$m]. Accordingly, in the image forming apparatus 1, it is desirable that the cover distance DM is measured using the actual pathology slide 100 to form an image in which the focal point of the imaging lens 5 is matched with the body tissue 102.

Regarding this, in the image forming system 20, the focal information generating device 21 generates the focal information IF by using the actual pathology slide 100 in advance. In this manner, in the image forming system 20, the focal point of the imaging lens 5 can be reliably matched with the body tissue 102 on the pathology slide 100 without depending on the speed of image data reading and the like in the image forming apparatus 1.

At this time, the image forming apparatus 1 knows the standard position Z1 or the other position Z2 with respect to each measurement point QM in advance. Accordingly, after calculation of the standard position Z1 and the other position Z2 with respect to the imaging point QC on the basis of this, the focal point of the imaging lens 5 can be matched with the body tissue 102 in a short time. In this manner, the image forming system 20 can significantly shorten a time required to generate the body tissue image PR with respect to the one pathology slide 100.

In addition, the image forming apparatus 1 can recognize the presence or absence of the air bubbles BB and the approximate position of the boundary line between the air bubbles BB and the embedding substance 103 on the basis of the air bubble information IB. Accordingly, the image forming apparatus 1 can significantly reduce the calculation processing load in comparison to the case of the first embodiment and can detect the specific position of the air bubbles BB in a short time. Thus, a time required to form the body tissue image PR can be significantly shortened.

Furthermore, also regarding other points, the image forming apparatus 1 of the image forming system 20 can obtain the same functional effects as those of the image forming apparatus 1 in the first embodiment.

According to the above-described configuration, the image forming system 20 detects the standard position Z1 or the other position Z2 for each measurement point QM by the focal information generating device 21. The image forming apparatus 1 forms the standard image P1 and the other picked-up image PC2 by connecting the standard picked-up images PC1 at the standard positions Z1 to each other and connecting the other picked-up images PC2 at the other positions Z2 to each other with respect to the imaging points QC. In addition, for a part where the air bubbles BB are contained in the embedding substance 103, the image forming apparatus 1 substitutes the standard image P1 with the other image P2, and thus forms the body tissue image PR. In this manner, the image forming system 20 can form the body tissue image PR which is nearly completely clear.

<3. Other Embodiments>

In the above-described first embodiment, the case was described in which when the air bubbles BB are present, a position where the focal point of the imaging lens 5 is matched with the body tissue 102 is set as the other position Z2.

The invention is not limited thereto, and the other position Z2 may be a position closer to the position where the focal point of the imaging lens 5 is matched with the body tissue 102 than at least the standard position Z1 when the air bubbles BB are present. In this case, the body tissue image PR can be obtained in which a part where the air bubbles BB are present is made clearer than at least the standard image P1.

In addition, in the above-described first embodiment, the case was described in which the standard image P1 and the other image P2 are synthesized on the basis of the position of the air bubbles BB discriminated by the air bubble place discrimination portion 13.

The invention is not limited thereto. For example, as in the second embodiment, the standard image P1 and the other image P2 may be synthesized on the basis of the position of the air bubbles BB detected by another detecting device.

Furthermore, in the above-described first embodiment, the case was described in which the presence or absence of the air bubbles BB and the position of the air bubbles BB are detected on the basis of the standard image P1.

The invention is not limited thereto, and the presence or absence of the air bubbles BB and the position of the air bubbles BB may be detected on the basis of the other image P2. This is also applied to the second embodiment.

In addition, in the above-described first embodiment, the case was described in which it is determined that the air bubbles BB are present when all of the "First Condition" to the "Fourth Condition" are satisfied.

The invention is not limited thereto. As in the case in which the [First Condition] and the [Second Condition] are satisfied, various conditions may be used independently or in combination to determine that the air bubbles BB are present.

Furthermore, in the above-described first embodiment, the case was described in which both of the standard position Z1 and the other position Z2 have been already known.

The invention is not limited thereto, and at least one of the standard position Z1 and the other position Z2 may be detected using a predetermined focal point detecting mechanism or the like.

Furthermore, in the above-described second embodiment, the case was described in which the image forming system 20 is constituted in which the image forming apparatus 1 and the focal information generating device 21 are separated from each other.

The invention is not limited thereto. These may be configured integrally with each other by, for example, installing the optical source 31, the object lens 35, the first light receiver 43, the second light receiver 49, and the like in the image forming apparatus 1.

Furthermore, in the above-described second embodiment, the case was described in which both of the focal information IF, representing the cover distance DM, and the air bubble information IB, representing the presence or absence of the air bubbles BB are generated by the focal information generating device 21.

The invention is not limited thereto, and for example, when the position and the like of the air bubbles BB are detected by the air bubble place discrimination portion 13 in the image forming apparatus 1, the focal information generating device 21 may generate only the focal information IF.

Furthermore, in the above-described second embodiment, the case was described in which the diffuse reflection component removing portion 44 of the focal information generating device 21 is constituted of the condenser lens 45, the pinhole plate 46, and the collimator lens 47 to remove the diffuse reflection components included in the second reflected optical beam Lr2.

The invention is not limited thereto. The diffuse reflection component removing portion may be constituted of other various optical elements or a combination thereof to remove the diffuse reflection components included in the second reflected optical beam Lr2.

Furthermore, in the above-described second embodiment, the case was described in which in calculating the standard position Z1 and the other position Z2, a position when the uniform reflectance RE representing the ratio of the second light-receiving signal S2 to the sum signal SS is less than the threshold TH3 is discriminated as a position Z3.

The invention is not limited thereto. For example, the position Z3 may be discriminated on the basis of various degrees of difference between the sum signal SS and the second light-receiving signal S2 as in the case in which the difference value between the sum signal SS and the second light-receiving signal S2 is equal to or larger than a predetermined threshold. In this case, the position Z3 may be discriminated by using the fact that the scattered light is blocked by the pinhole plate 46 and the value of the second light-receiving signal S2 is smaller than the value of the sum signal SS.

Furthermore, in the above-described first embodiment, the case was described in which the imaging lens 5 is moved in the Z direction by the actuator 6 and the XY stage 4 is not moved in the Z direction.

The invention is not limited thereto, and for example, the imaging lens 5 may be fixed and the moving stage 4A of the XY stage 4 may also be moved in the Z direction (that is, XYZ stage). In short, the relative position of the focal point FC of the imaging light LC to the pathology slide 100 may be changed in the Z direction. This is also applied to the second embodiment and is also applied to the case of the object lens 35 and the XY stage 30 of the focal information generating device 21.

Furthermore, in the above-described embodiments, the case was described in which the plurality of imaging points QC are set in the pathology slide 100 (Fig. 13). The invention is not limited thereto. For example, when the imaging portion 8 can image the entire imaging range of the body tissue 102 through a single imaging process, only one imaging point QC may be set. The measurement points QM may be arranged at intervals equal to or less than those between the imaging points QC.

Furthermore, in the above-described embodiments, the case was described in which the body tissue 102 is an imaging target. The invention is not limited thereto and other various objects may be an imaging target. In this case, the imaging target may have properties to partially diffusely reflect the optical beam LM. In this manner, the focal information generating device 21 can detect the position Z3 on the basis of the uniform reflectance RE.

In the above-described first embodiments, the case was described in which the image forming apparatus 1 as an image forming apparatus is constituted of the imaging portion 8 as an imaging portion, the actuator 6 and the driving control portion 3 as a focal point moving portion, the integrated control portion 2 as a focal point position obtaining portion, the integrated control portion 2 as an imaging control portion, the air bubble place discrimination portion 13 as an air bubble information obtaining portion, and the synthesis processing portion 12 as an image forming portion.

However, the invention is not limited thereto and the image forming apparatus may be constituted of an imaging portion, a focal point moving portion, a focal point position obtaining portion, an imaging control portion, an air bubble information obtaining portion, and an image forming portion which are other various constituent components.

Industrial Applicability

The invention can be used in various image forming apparatuses which form an image by imaging an imaging target which may include air bubbles.

Reference Signs List

1:      IMAGE FORMING APPARATUS

2:      INTEGRATED CONTROL PORTION

3:      DRIVING CONTROL PORTION

4:      XY STAGE

5:      IMAGING LENS

6:      ACTUATOR

8:      IMAGING PORTION

10:     IMAGE PROCESSING PORTION

11:     STORAGE PORTION

12:     SYNTHESIS PROCESSING PORTION

13:     AIR BUBBLE PLACE DISCRIMINATION PORTION

20:     IMAGE FORMING SYSTEM

21:     FOCAL INFORMATION GENERATING DEVICE

22:     INTEGRATED CONTROL PORTION

23:     DRIVING CONTROL PORTION

24:     SIGNAL PROCESSING PORTION

30:     XY STAGE

35:     OBJECT LENS

36:     ACTUATOR

41:     BEAM SPLITTER

43:     FIRST LIGHT RECEIVER

44:     DIFFUSE REFLECTION COMPONENT REMOVING PORTION

45:     CONDENSER LENS

46:     PINHOLE PLATE

49:     SECOND LIGHT RECEIVER

100:    PATHOLOGY SLIDE

101:    GLASS SLIDE

102:    BODY TISSUE

103:    EMBEDDING SUBSTANCE

104:    COVER GLASS

QM:     MEASUREMENT POINT

QC:     IMAGING POINT

BB:     AIR BUBBLE

LM:     OPTICAL BEAM

Lr:     REFLECTED OPTICAL BEEM

Lr1:    FIRST REFLECTED OPTICAL BEAM

Lr2:    SECOND REFLECTED OPTICAL BEAM

FM:     FOCAL POINT

S1A     TO S1D: FIRST LIGHT-RECEIVING SIGNAL

SS:     SUM SIGNAL

SD:     DIFFERENCE SIGNAL

S2:     SECOND LIGHT-RECEIVING SIGNAL

RE:     UNIFORM REFLECTANCE

**Claims**

**1.**  An image forming apparatus comprising:

an imaging portion which forms an image by condensing the light which is obtained from a pathology slide in which a sliced body tissue is placed on a placing surface of a glass slide and is covered with an embedding substance and a cover glass by a predetermined imaging lens;

a focal point moving portion which changes a relative position of the focal point of the imaging lens to the pathology slide in the optical axis direction of the imaging lens;

a focal point position obtaining portion which obtains, among the relative positions, a standard position where the focal point of the imaging lens is matched with the body tissue when air bubbles are not contained in the embedding substance on the optical axis, and an other position closer to a position where the focal point of the lens is matched with the body tissue when air bubbles are contained in the embedding substance on the optical axis than the standard position;

an imaging control portion which forms, by the imaging portion, a standard image and an other image when the relative positions of the focal point of the imaging lens are set as the standard position and the other position by the focal point moving portion;

an air bubble information obtaining portion which obtains air bubble information representing a place where the air bubbles are present in the pathology slide; and

an image forming portion which forms a body tissue image in which a part excluding the air bubbles in the standard image and a part corresponding to the air bubbles in the other image are synthesized on the basis of the air bubble information.

2. The image forming apparatus according to Claim 1, further comprising:

an air bubble information generating portion which detects the part inside of the closed area formed by the boundary line between the embedding substance and the air bubbles as the place where the air bubbles are present in at least one of the standard image and the other image, and generates the air bubble information, wherein the air bubble information obtaining portion obtains the air bubble information from the air bubble place detecting portion.

3. The image forming apparatus according to Claim 2, wherein the air bubble information generating portion detects the part inside of the boundary line as the place where the air bubbles are present when the line width of the boundary line forming the closed area is in a predetermined range.

4. The image forming apparatus according to Claim 2, wherein the air bubble information generating portion detects the part inside of the closed area as the place where the air bubbles are present on the basis of a comparison result between a frequency component in the closed area and a frequency component outside the closed area.

5. The image forming apparatus according to Claim 1, wherein the focal point position obtaining portion obtains, among the relative positions, a position where the focal point of the lens is matched with the body tissue when the air bubbles are contained in the embedding substance on the optical axis as the other position.

6. The image forming apparatus according to Claim 1, wherein the focal point position obtaining portion includes:

an object lens which condenses a predetermined optical beam;

a separation portion which separates a reflected optical beam which is obtained due to the reflection of the optical beam from the pathology slide into a first reflected optical beam and a second reflected optical beam;

a first light receiving portion which receives the first reflected optical beam and generates a first light-receiving signal;

a diffuse reflection component removing portion which removes diffuse reflection components which are included in the second reflected optical beam;

a second light receiving portion which receives the second reflected optical beam passing through the diffuse reflection component removing portion and generates a second light-receiving signal; and

a focusing position detecting portion which detects the position of the imaging lens when the focal point of the imaging lens is matched with the body tissue on the basis of the first and second light-receiving signals when the relative position of the focal point of the object lens to the pathology slide is changed.

7. The image forming apparatus according to Claim 6,

wherein the focusing position detecting portion discriminates that the focal point of the object lens is matched with the body tissue when a ratio of the second light-receiving signal to the first light-receiving signal is equal to or less than a predetermined threshold.

8. The image forming apparatus according to Claim 6,
   wherein the diffuse reflection component removing portion includes:

   a condenser lens which condenses the second reflected optical beam; and
   a pinhole plate which blocks a part excluding the vicinity of the focal point of the second reflected optical beam condensed by the condenser lens.

9. An image forming method comprising:

   a standard position obtaining step of obtaining, as a relative position between an imaging lens and a pathology slide in which a sliced body tissue is placed on a placing surface of a glass slide and is covered with an embedding substance and a cover glass, a standard position where the focal point of the imaging lens is matched with the body tissue when air bubbles are not contained in the embedding substance on the optical axis of the imaging lens;
   an other position obtaining step of obtaining, as the relative position, an other position closer to a position where the focal point of the lens is matched with the body tissue when air bubbles are contained in the embedding substance on the optical axis than the standard position;
   a moving step of moving relative positions of the focal point of the imaging lens to the pathology slide to the standard position and the other position in the optical axis direction of the imaging lens;
   an image forming step of forming a standard image and an other image by condensing the light which is obtained from the body tissue when the relative positions are moved to the standard position and the other position by the imaging lens;
   an air bubble information obtaining step of obtaining air bubble information representing a place where the air bubbles are present in the pathology slide; and
   an image forming step of forming a body tissue image in which a part excluding the air bubbles in the standard image and a part corresponding to the air bubbles in the other image are synthesized on the basis of the air bubble information.

(A)

101A    102A    102 BODY TISSUE

101 GLASS SLIDE

(B)

103 EMBEDDING SUBSTANCE    102 BODY TISSUE

101 GLASS SLIDE

(C)

100 PATHOLOGY SLIDE

104 COVER GLASS

103 EMBEDDING SUBSTANCE    102 BODY TISSUE

101 GLASS SLIDE

FIG.1

<u>100</u> PATHOLOGY SLIDE

104A

104 COVER GLASS

DC

EMBEDDING
103 SUBSTANCE

(A)

102 BODY TISSUE

101 GLASS SLIDE

104B

102 BODY TISSUE

(B)

FIG.2

(A)

104A
BB AIR BUBBLES
104 COVER GLASS
103 EMBEDDING SUBSTANCE
102 BODY TISSUE
101 GLASS SLIDE
103
104B

(B)

102 BODY TISSUE
BB AIR BUBBLES

FIG.3

FIG.4

EP 2 410 367 A1

FIG.5

(A)

P1

NB

AB

(B)

P2

NB

AB

(C)

PR

NB

FIG.6

START ~RT1

SP1

FORMING STANDARD PICKED-UP IMAGES AND OTHER PICKED-UP IMAGES WITH RESPECT TO ALL OF IMAGING POINTS

SP2

FORMING STANDARD IMAGE BY CONNECTING STANDARD PICKED-UP IMAGES TO EACH OTHER AND FORMING OTHER IMAGE BY CONNECTING OTHER PICKED-UP IMAGES TO EACH OTHER

SP3

IS THERE AREA CLOSED BY CURVE IN STANDARD IMAGE?

NO

YES

SP4

IS LINE WIDTH OF CURVE IN PREDETERMINED WIDTH?

NO

YES

SP5

IS CURVATURE OF CURVE EQUAL TO OR LESS THAN PREDETERMINED VALUE?

NO

YES

SP6

IS THERE LARGE DIFFERENCE BETWEEN FREQUENCY COMPONENTS INSIDE OF AND OUTSIDE OF AREA?

NO

YES

SP8

SETTING STANDARD IMAGE AS BODY TISSUE IMAGE AS IS

SP7

SUBSTITUTING IMAGE IN AREA IN STANDARD IMAGE WITH OTHER IMAGE, THEREBY FORMING BODY TISSUE IMAGE

END ~SP9

FIG.7

20 IMAGE FORMING SYSTEM

21 FOCAL INFORMATION
GENERATING DEVICE

1 IMAGE FORMING APPARATUS

IF

100 PATHOLOGY SLIDE

100 PATHOLOGY SLIDE

FIG.8

21 FOCAL INFORMATION
GENERATING DEVICE

31 OPTICAL
SOURCE

LM

32 COLLIMATOR
LENS

42 MULTI LENS

43 FIRST LIGHT
RECEIVER

41 BS

31S

Lr

33 PBS

33S

Lr1

Lr2

1/4-
34 WAVELENGTH
PLATE

LM,Lr

36 ACTUATOR

Z

45

46H

46

35 OBJECT LENS
100 PATHOLOGY
SLIDE

FM

30A

X

44 DIFFUSE
REFLECTION
COMPONENT
REMOVING
PORTION

47

Y

30 XY STAGE

48 CONDENSER
LENS

49 SECOND LIGHT
RECEIVER

24

22

23

SIGNAL
PROCESSING
PORTION

INTEGRATED
CONTROL
PORTION

DRIVING
CONTROL
PORTION

FIG.9

43 FIRST LIGHT RECEIVER

FIG.10

FIG.11

FIG.12

RT2 — START

MATCHING OPTICAL AXIS OF OPTICAL BEAM WITH MEASUREMENT POINT OF PATHOLOGY SLIDE BY MOVING XY STAGE — SP11

CALCULATING SUM SIGNAL AND DIFFERENCE SIGNAL WHILE MOVING OBJECT LENS IN Z DIRECTION — SP12

SETTING POSITION WHEN SUM SIGNAL IS EQUAL TO OR LARGER THAN THRESHOLD TH1 OR WHEN DIFFERENCE SIGNAL FORMS S-CURVE AS POSITION Z11 — SP13

DETECTING POSITION Z WHERE SUM SIGNAL IS EQUAL TO OR LARGER THAN THRESHOLD TH2 AND UNIFORM REFLECTANCE RE IS LESS THAN THRESHOLD TH3 — SP14

SP15
IS S-CURVE SHOWN IN DIFFERENCE SIGNAL OUTSIDE OF POSITION Z11?

YES

NO

SETTING POSITION Z AS STANDARD POSITION Z1 — SP16

SETTING POSITION Z AS OTHER POSITION Z2 — SP18

DETERMINING THAT AIR BUBBLES ARE NOT PRESENT AT MEASUREMENT POINT — SP17

DETERMINING THAT AIR BUBBLES ARE PRESENT AT MEASUREMENT POINT — SP19

END — SP20

FIG.13

FIG.14

START ~RT3

SP21

CALCULATING STANDARD POSITION AND OTHER
POSITION OF EACH IMAGING POINT ON THE BASIS OF
STANDARD POSITION AND OTHER POSITION
OF EACH MEASUREMENT POINT

SP22

FORMING STANDARD PICKED-UP IMAGES AND OTHER
PICKED-UP IMAGES WITH RESPECT
TO ALL OF IMAGING POINTS

SP23

FORMING STANDARD IMAGE BY CONNECTING STANDARD
PICKED-UP IMAGES TO EACH OTHER AND FORMING OTHER IMAGE
BY CONNECTING OTHER PICKED-UP IMAGES TO EACH OTHER

SP24

NO          ARE AIR
BUBBLES PRESENT IN
STANDARD IMAGE?

YES

SP28

SETTING STANDARD IMAGE
AS BODY TISSUE
IMAGE AS IS

SP25

RECOGNIZING APPROXIMATE POSITION OF BOUNDARY
LINE OF AIR BUBBLES ON THE BASIS
OF AIR BUBBLE INFORMATION

SP26

CALCULATING SPECIFIC POSITION OF
BOUNDARY LINE IN STANDARD IMAGE

SP27

SUBSTITUTING IMAGE IN AREA IN STANDARD
IMAGE WITH OTHER IMAGE, THEREBY
FORMING BODY TISSUE IMAGE

END ~SP29

FIG.15

<table>
<tr><td colspan="2" align="center"><b>INTERNATIONAL SEARCH REPORT</b></td><td>International application No.<br>PCT/JP2010/053707</td></tr>
</table>

**A. CLASSIFICATION OF SUBJECT MATTER**

*G02B21/36*(2006.01)i, *G02B7/28*(2006.01)i, *G02B21/00*(2006.01)i, *H04N5/225* (2006.01)i, *H04N5/232*(2006.01)i

According to International Patent Classification (IPC) or to both national classification and IPC

**B. FIELDS SEARCHED**

Minimum documentation searched (classification system followed by classification symbols)

G02B21/36, G02B7/28, G02B21/00, H04N5/225, H04N5/232

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2007/138792 A1 (Olympus Corp.),<br>06 December 2007 (06.12.2007),<br>entire text; all drawings<br>& JP 2007-313119 A     & US 2009/0148014 A1<br>& EP 2033567 A1 | 1-9 |
| A | JP 2006-122502 A (Sony Corp.),<br>18 May 2006 (18.05.2006),<br>entire text; all drawings<br>& US 2007/0191677 A1     & EP 1806091 A1<br>& WO 2006/046637 A1     & CN 101043841 A | 1-9 |
| A | JP 2004-354100 A (Matsushita Electric Works,<br>Ltd.),<br>16 December 2004 (16.12.2004),<br>entire text; all drawings<br>(Family: none) | 1-9 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 March, 2010 (24.03.10) | Date of mailing of the international search report<br>06 April, 2010 (06.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/053707

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-535630 A  (KERSCHMANN, Russell, L., BOLLES, Michael, E., HENDRICKSON, Andrew, D.), 22 October 2002 (22.10.2002), entire text; all drawings & US 6330348 B1          & EP 1148806 A & WO 2000/042897 A2      & AU 2733700 A & CN 1337030 A | 1-9 |
| A | JP 10-508709 A  (Neopath Inc.), 28 May 1998 (28.05.1998), entire text; all drawings & US 5566249 A            & EP 782737 A & WO 1996/009601 A1       & DE 782737 T & AU 3548295 A            & CA 2200444 A & AU 1735999 A            & ES 2114510 T & GR 98300025 T | 1-9 |

Form PCT/ISA/210 (continuation of second sheet) (July 2009)

**EP 2 410 367 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006292999 A